# EUROPEAN PATENT SPECIFICATION

(11) **EP 2 094 765 B1**
(45) Date of publication and mention of the grant of the patent: **16.02.2011**
(21) Application number: 07821901.1
(22) Date of filing: 26.10.2007
(51) Int. Cl.: C08G 77/10, C08G 77/16

(54) **REACTIVE SILANOL-HALS AMINO SILICONE POLYMER WITH IMPROVED FABRIC COATING PERFORMANCE**
REAKTIVES SILANOL-HALS-AMINOSILIKONPOLYMER MIT VERBESSERTER LEISTUNG HINSICHTLICH DER BESCHICHTUNG TEXTILER FLÄCHENGEBILDE
POLYMÈRE DE SILICONE AMINÉ RÉACTIF DE TYPE SILANOL-HALS AVEC DES PERFORMANCES DE REVÊTEMENT AMÉLIORÉES

(30) Priority: 31.10.2006 US 855708 P
(43) Date of publication of application: 02.09.2009
(73) Proprietor: Bluestar Silicones France, 69486 Lyon Cedex 03 (FR)
(72) Inventor: BEHNAM, Basil A., Oakville, Ontario L6H 5C1 (CA); GRIFFITHS, Robert J., Charlotte, NC 28277 (US); VANDEVELDE, David V., Mississauga, Ontario L5N 3A1 (CA)
(86) International application number: PCT/EP2007/061541
(87) International publication number: WO 2008/052941

(56) References cited:
- US-A- 5 475 077
- US-A- 5 540 952

## Description

### Field of The Invention

The present invention relates to a method for preparing sterically hindered amine silicone polymers having incorporated therein reactive sites that can provide stable bonding forces between the polymer and fibrous substrates to which the polymer may be applied. More particularly, the polymers when applied to fabric can produce coatings that not only impart enhanced softening, non-yellowing, and hydrophilic properties to the fabric but also serendipitously provide a coating matrix that, when dried and/or cured, can enhance the durability of encapsulated compositions that are present on or within the fabric substrate.

### Background of The Invention

It is known to condition fibrous material by treating it with a finishing composition. The fibrous material can comprise woven, knitted and even nonwoven fabric, and in the broadest sense, also comprise paper. The fibers of the fibrous material can be made of natural fibers including cellulosic and protein fibers, synthetic fibers, and blends thereof.

Various finishing compositions have been described in the prior art for enhancing the appearance and handling characteristics of these fibrous materials. Very early it was recognized that organosilicone compositions are useful for treating textiles to confer thereto desirable characteristics, such as "hand", antistatic behavior, water repellency and improved tear strength.

Historically, three varieties of silicone polymers have found use as textile conditioners. One variety is based on emulsified dimethyl fluids. Another variety is based on emulsified reactive fluids having Si-H groups dispersed throughout the polymer. The third variety has amino or epoxy functional groups located on the polymer backbone.

The emulsified dimethyl silicone fluids are water clear and do not discolor with heat or age. They impart soft silky hands and some water repellency to fabrics; however, being rather inert fluids, they are not durable.

Stable emulsions with methylhydrogen polysiloxanes can be applied to a fabric with, e.g., a tin catalyst, such as dibutyltin dilaurate, to hydrolyze the Si-H groups to the silanol and condense the polymers to form a crosslinked matrix, which offers a way to increased durability.

Epoxy functionality offers a non-silanol crosslinking mechanism along with the ability to react with fiber hydroxyls. These epoxy softeners are durable, however amino functional silicones produce a much softer, more desirable hand. Additionally, since amino functionalized polyorganosiloxanes improve fiber and yarn slippage, they reduce transmission of wrinkling forces to these substrates thereby giving modest improvement to the durable press performance of fabrics, especially cotton and wool fabrics.

Synthetic textiles have been treated with aminoalkyl-containing organopolysiloxanes with and without using a crosslinking component for the polysiloxane. Typical documents disclosing this art are U. S. Patent 4,247,592 where the amino functionality to be substituted on the polysiloxane backbone is proposed to be of the formula: -R'(NHCH₂CH₂)ₐNHR" wherein a is 0 or 1, R' denotes a lower alkylene radical, and R" denotes a hydrogen radical or a lower alkyl radical; and EP-A-0,546,231 where a description is given of the use of a polyorganosiloxane having the following functionality attached: -(CH₂)_{y}-(OCH₂)_{y}-CH(OH)CH₂-N(CH₂CH₂OH)₂ wherein y is a number ranging from 2 to 8 and y' equals 0 or 1.

However, during the use in conventional techniques of the textile industry of finishing compositions comprising polyorganosiloxanes containing amine functional groups similar to those described above, a yellowing of the treated fibers is observed. This yellowing is the result of the thermal oxidation of the amino groups of the polyorganosiloxane that are deposited on the fibers.

Recent advances in the polysiloxane art have resulted in polymers that when used in textile or paper conditioning applications have made it possible to greatly restrict and even suppress the yellowing phenomenon experienced with the use of the amine functionalities of the earlier art. This has been accomplished by attaching sterically hindered piperidyl functional groups, which heretofore had been recognized as anti-UV stabilizers in other polymers, onto the siloxane backbone as taught, for example, in U. S. Patents 5,540,952 and 5,721,297, and U. S. Patent Publication 2004/0083553.

Although these sterically hindered aminated polyorganosiloxane polymers are a significant improvement to the textile and paper finishing art, especially the textile art - yielding substrates with superior hydrophilic softness, "hand", anti-static, and water repellency characteristics - the art continually seeks ways to increase the durability of these finished coatings. The lack of the desired coating durability results from the fact that the sterically hindered aminated polyorganosiloxanes of the prior art bond poorly to fibrous material due to the weak attractive forces between the polymer and the fibers.

It has been discovered that by end-capping sterically hindered aminated polyorganosiloxane polymers with highly reactive hydroxyl groups, the bonding strength of these polymers to the fibers in fibrous substrates is unexpectedly enhanced. This results in finishing compositions containing these polymers that, when properly applied, realize textile and/or paper substrates that not only retain highly desirable conditioning characteristics including softness, "hand", water repellency, and anti-static behavior but additionally, have greatly improved durability of these characteristics.

Thus, the invention relates to novel hydroxy end-capped, sterically hindered aminated polyorganosiloxane polymers and to the discovery of a unique method of preparing these polymers. These polymers can be prepared not only by standard commercial techniques but additionally, are quite stable in storage. Also, the instant invention includes dried and/or cured fibrous substrates, such as fabric or paper prepared using finishing compositions containing these novel polymers.

Condensation reactions with hydroxyl end-capped organosiloxanes can occur in the absence of a reaction catalyst, however, many acids or bases catalyze these reactions to give long chains by the intermolecular linear condensation of the terminal hydroxyls. It is reported that a distribution of chain lengths is obtained and longer chains are favored when working under vacuum and/or at elevated temperatures to reduce the residual water concentration.

In many end-use applications, including fabric conditioning applications, hydroxy end-capped polysiloxanes are crosslinked by condensation reactions with silanes. These compositions are usually referred to as being one-part or two-part systems.

In one-part systems, also often used as sealants, compositions are typically formulated from a reactive polymer prepared from a hydroxy endblocked polydimethylsiloxane and an excess of, for example, methytriacetoxysilane are exposed to moisture to intiate the reaction. HO - (Me₂SiO)ₓ - H + MeSi(OAc)₃ → (AcO)₂MeSiO(Me₂SiO)ₓOSiMe(OAc)₂

As a large excess of silane is used, the probability of two different chains reacting with the same silane molecule is remote and all the chains are endblocked with two -OAc functions. The resulting product is still liquid and can be stored in sealed cartridges. Upon opening and contact with the moisture of the air, the acetoxy groups are hydrolyzed to give silanols that allow further condensation to occur. In this way, two chains have been linked, and the reaction will proceed further from the remaining acetoxy groups. An organometallic tin catalyst is normally used to speed up the reactivity. This crosslinking requires that moisture diffuses within the product and the cure will proceed from the outside surface toward the inside. These sealants are thus called one-part RTVs (room temperature vulcanization) sealants, but they actually require moisture as a second component. Acetic acid is released as a by-product of the reaction and corrosion problems are possible on certain substrates. To overcome this potential corrosion problem, other systems have been developed wherein the one-part systems release less corrosive or non-corrosive by-products, e.g., alcohol using the alkoxysilane RSi(OR')₃ instead of the acetoxysilane.

In condensation cured two-part systems, the crosslinking starts upon mixing two components, to wit, a hydroxy endblocked organopolysiloxane polymer and an alkoxysilane such as tetra n-propoxysilane: 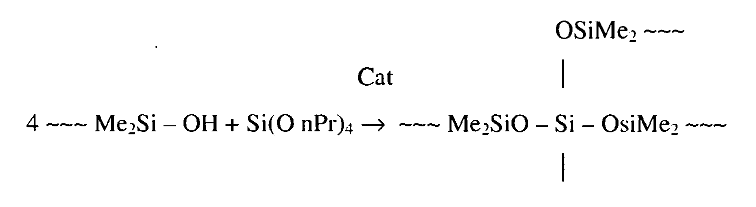 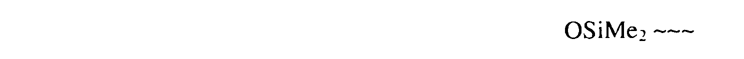 Hence, no atmospheric moisture is needed. Usually an organotin salt is used as the catalyst; however doing so limits the stability of the resulting elastomer at high temperatures. Alcohol is released as a by-product of the cure.

Thus, there are many art-recognized methods to crosslink the hydroxy terminated hindered amine polyorganosiloxanes realized by the instant invention. Importantly however, they can be cured by heat alone, catalysts at ambient temperatures, or heat and catalysts.

Cyclic oligomers, usually obtained by the hydrolysis of dimethyldichlorosilane, have too short a chain length for most applications, therefore they are polymerized to give macromolecules of more useful length.

In the prior art, the opening and polymerizing of organosiloxane cyclics to form long linear chains is catalyzed by many acid and base compounds and usually gives at equilibrium a mixture of cyclic oligomers plus a distribution of polymers. The proportion of cyclics will depend on the substituents along the chain, the reaction temperatures utilized and the presence and properties of a solvent.

The kinetic system of the ring opening of the cyclosiloxanes is very complex. Linear siloxane polymers can be synthesized from the ring opening of the cyclopolysiloxanes by cationic, anionic, or by radiation initiation. Cationic systems are more susceptible to having side reactions and use a combined mechanism of step and growth, i.e., they proceed through a number of cyclics in the early stages of the reaction thereby resulting in a high polydispersity in the final product. Therefore, anionic ring opening is the preferred reaction system that gives a more narrow molecular weight distribution as well as better control of the molar mass. Alkali metal hydroxides are the preferred initiators of the anionic ring opening reactions because the alkali metals are the most electropositive of the elements.

It has been disclosed that the final average polymer chain length will primarily depend on the presence of substances capable of giving chain ends, i.e., the chain stopping compounds. Also, for example, it has been taught that in the polymerization of cyclic (Me₂SiO)₄ with KOH, the average length of the polymer chains depends on the KOH concentration:

x(Me₂SiO)₄ + KOH → (Me₂SiO)_{y} + KO(Me₂SiO)_{z}H

and that a stable and -OH terminated polymer, HO(Me₂SiO)_{z}H, can be isolated after neutralizing and stripping the above mixture, under vacuum, of the remaining cyclics.

Many methods are disclosed in the prior art that produce linear alpha, omega dihydroxy terminated polydiorganosiloxane polymers by the ring opening of cyclic siloxanes. Primarily acid catalysts such as fluorinated sulphonic acids, alkyl sulfonic acids, and anhydrous perfluoroalkane sulphonic acids have been used in these reactions as disclosed in, for example, GB Patents 899,657 and 1,325,654. These reactions are said to take place from about 50° C to about 200° C with prolonged heating and water removal, i.e., the procedures require minimizing the presence of water. During this ring opening reaction, which is commonly known as an equilibration reaction, the SiO bonds are constantly being cleaved and reformed in a series of competing reactions involving both cyclic and linear species - building up molecular structure, until an equilibrium distribution is reached. Molecular weight control is obtained by the use of "end blockers", such as hexamethyl disiloxane derivatives, which act as chain stopping or termination agents.

Typical of the prior art, U. S. Patent 4,689,383 discloses that dihydroxy functional disiloxanes can be reacted with cyclic polysiloxanes to form difunctional hydroxy terminated polysiloxanes. It is stated that molecular weight is controlled by the ratio of starting disiloxane to the starting cyclic siloxane. This equilibration reaction takes place in the presence of 0.1 percent by weight of a trifluormethane sulfonic acid catalyst at 65° C.

U. S. Patent 3,065,201 discloses that the polymerization of cyclic trisiloxane is best carried out in the presence of an alkaline catalyst such as alkali metal hydroxides or the silane salts of alkali metal hydroxides at temperatures ranging from 50° C to 150° C. It is taught that these polymers are usually end blocked with a triorganosiloxane. Often the organic end groups are 3,3,3-trifluoroporpyl and methyl or any combination of methyl, ethyl, vinyl, and phenyl.

U. S. Patent 3,296,199 discloses that octamethylcyclotetrasiloxane can be equilibrated to an extremely high molecular weight by use of an equilibrium catalyst such as KOH under moderate pressure. Controlled amounts of water can then be added to the resulting high molecular weight polydiorganosiloxane to effect chain scission and thus achieve the desired viscosity. It is further taught that depending upon the temperature utilized, the ratio of reactants and the particular reaction employed, reaction periods of as little as 1 hour or less to 24 hours or more are not unusual. The reference further notes that recovery of the desired polymer can be readily achieved by allowing the mixture to achieve the desired viscosity and then removing unreacted material such as unreacted cyclic siloxane, under reduced pressure.

U. S. Patent 4,395,526 teaches that silanol terminated silicone polymers having viscosities in the range of from about 100 to about 400,000 centipoise and more can be made by treating higher molecular weight organopolysiloxanes, such as dimethylpolysiloxane with water in the presence of a mineral acid or base catalyst to tailor the viscosity of the polymer to the desired range. The higher molecular weight organopolysiloxane polymers utilized in the production of the silanol-terminated siloxanes in this patent are taught to be available by equilibration reactions of cyclosiloxanes such as octamethylcyclotetrasiloxane, octaphenylcyclotetrasiloxane, or mixtures thereof. It is emphasized that these high molecular weight polymers should be decatalyzed of the equilibration catalyst prior to end-use as taught in U. S. Patent 3,153,007.

Low viscosity silanol-terminated organopolysiloxanes, i.e., ones having viscosities below 1200 centipoises, can be made by treating organopolysiloxanes consisting essentially of chemically combined diorganosiloxy units with steam under pressure is also taught in U. S. Patent 4,395,526. Other methods that can be employed to make silanol-terminated polydiorganosiloxanes are more particularly described in U. S. Patent 2,607,792 and U. K. Patent 835,790.

U. S. Patent 4,748,166 discloses that alpha, omega dihydroxydiorganopolysiloxane polymers can be prepared by polymerizing diorganocyclopolysiloxanes with the aid of catalytic amounts of alkaline or acid agents, and then treating the polymers with water. As the amount of water is increased, the viscosity of the final polymer is decreased. Residual cyclic polymers as well as low molecular weight polymers are taught to be eliminated under reduced pressure after neutralizing the acid or alkaline agents used as the polymerization catalyst.

U. S. Patent 3,153,007 discloses a method for preparing linear, silanol end-capped polyorganosiloxanes using an effective amount (0.001 to 0.1 percent by weight, based on the weight of the cyclic polymer) of alkali metal catalyst and from 30 to 1,000 parts of water per million parts of the starting cycloorganosiloxane.

A number of U. S. Patents (2,985,545; 2,607,792; and 2,779,776) teach the following generic method for preparing silanol end-capped organopolysiloxanes: cyclic siloxanes are heated with an alkaline catalyst at an elevated temperature for times ranging from about 15 minutes to 2 hours or more; and the catalyst removed or neutralized to yield a polymer having a viscosity of from about 700,000 to about 2,000,000 centipoise at 25° C. The viscosity can be reduced to from about 50 to about 100,000 cps while still retaining the silanol end caps by adding water and heating from 150° C to 170° C or blowing steam through the polymer above atmospheric pressure for sufficient time to effect the desired viscosity reduction. The amount of water used will vary depending upon such factors as the molecular weight of the polymer being treated, the time and temperature at which the mixture of high molecular weight organopolysiloxane and water will be heated, the ultimate viscosity desired, etc. US 5 475 077 discloses hydroxy terminated polyorganosiloxanes prepared by alkali-catalysed ring-opening reactions of cyclic or linear diorganosiloxanes.

Catalyst removal, usually by neutralization, is always an important step in silicone preparations. Most catalysts used to prepare silicones can also catalyze depolymerization (attack along the chain), particularly in the presence of water traces at elevated temperatures. The art has developed labile catalysts that decompose or are volatilized above the optimum polymerization temperature and so can be eliminated by a brief overeating; in this way catalyst neutralization or filtration can be avoided. However, when a strong mineral base such as KOH is used as the catalyst, the decatalyzing agents and neutralization methods recommended by the prior art (U. S. Patent 3,153,007) usually involve a) washing with acetic acid; b) adding elemental iodine; c) treating the catalyst with certain organophosphorous compounds; or d) using certain non-corrosive bromo alkanes.

The prior art reactions to produce hydroxy terminated siloxanols, as set forth above, are not facilely controlled in that it has proven difficult to control the insertion of substituents on the siloxane backbone and the final polymer molecular weight. An object of this invention is to provide a method that produces hydroxy terminated, sterically hindered aminated polyorganosiloxane polymers in a very controlled manner to desired molecular weights.

To reiterate, the instant invention provides a novel, specific class of aminated silicone polymers that exhibit noteworthy advantages and ameliorate or avoid the afore identified disadvantages of other known compounds of the prior art and a unique method for producing same. Additionally, the polymers of the instant invention can be applied to fabric and dried and/or cured thus forming a durable matrix for extending the presence of additional components on or within the fibrous material substrate and the release of any microencapsulated beneficiating compositions that may be present.

### Summary of the Invention

The instant invention relates to the discovery of a specific class of sterically hindered aminated silicone polymers that ameliorate or avoid the aforedescribed disadvantages of the prior art. Furthermore, the instant invention includes a unique method for preparing these novel polymers. Serendipitously, when applied to fabrics and dried and/or cured in the presence of microencapsulated compositions, the silicone matrix provides enhanced durability, i.e., time extended release to the compositions.

### Detailed Description of The Best Mode and Specific / Preferred Embodiments of the Invention

The instant invention relates primarily to the discovery of a novel dihydroxy end-capped sterically hindered aminated polyorganosiloxane polymer, i.e., a silanol chain stopped polymer and a process for making same.

More specifically, the instant invention relates to the discovery of a unique process for the preparation of a novel class of sterically hindered, aminated silicones of the following general stricture: 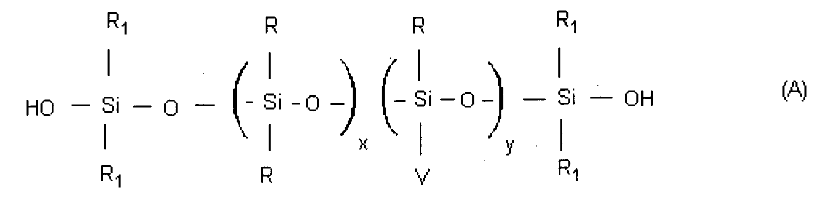 In which:
The symbols R are identical or different and represent a monovalent hydrocarbon radical chosen from linear or branched alkyl radicals having from 1 to 4 carbon atoms, the phenyl radical, and the 3,3,3-trifluoropropyl radical;
the symbols R₁ are identical or different and represent a radical chosen from the monovalent hydrocarbon radical R such as defined hereinabove, a hydroxyl group, and a linear or branched alkoxy radical having from 1 to 3 carbon atoms;
the symbol V represents a sterically hindered piperidinyl functional residue selected from the group consisting of:
   (a) groups of the formula: 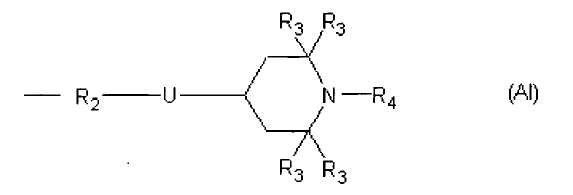 in which:
      R₂ is a divalent hydrocarbon radical chosen from:
         linear or branched alkylene radicals having from 2 to 18 carbon atoms;
         alkylenecarbonyl radicals in which the linear or branched alkylene part contains 2 to 20 carbon atoms;
         alkylenecyclohexylene radicals in which the linear or branched alkylene part contains from 2 to 12 carbon atoms and the cyclohexylene part contains an -OH group and optionally 1 or 2 alkyl radicals having from 1 to 4 carbon atoms;
         radicals of the formula: -R₅-O-R₆- in which the radicals R₅ and R₆ which are identical or different, represent alkylene radicals having 1 to 12 carbon atoms;
         radicals of the formula -R₅-O-R₆- in which the radicals R₅ and R₆ have the meanings indicated above and one of them or both are substituted by one or two -OH groups;
         radicals of the formula -R₅-COO-R₆- and -R₅-OCO-R₆- in which the radicals R₅ and R₆ have the meanings given above;
         radicals of the formula -R₇-O-R₈-O-CO-R₉- in which R₇, R₈, and R₉, which are identical or different, represent alkylene radicals having from 2 to 12 carbon atoms and the radical R₈ is optionally substituted by a hydroxyl group;
      U represents -O- or -NR₁₀-, R₁₀ being a radical chosen from a hydrogen atom, a linear or branched alkyl radical having from 1 to 6 carbon atoms, a divalent radical R₂ having the meaning indicated above, one of the valency bonds being connected to the nitrogen atom of -NR₁₀- and the other being connected to a silicon atom, and a divalent radical of the formula: 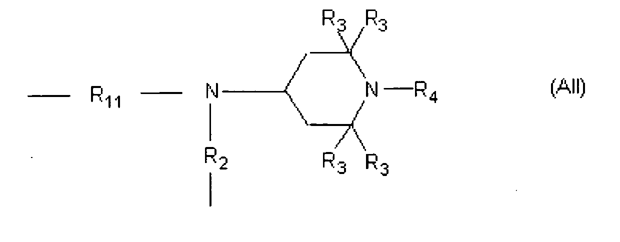 in which:
         R₂ has the meaning indicated above, R₃ and R₄ have the meanings indicated hereinbelow, and R₁₁ represents a linear or branched alkylene radical having from 1 to 12 carbon atoms, one of the valency bonds (that of the R₁₁) being connected to the nitrogen atom of -NR₁₀- and the other (that of R₂) being connected to a silicon atom;
         R₃ are radicals, which are identical or different, chosen from linear or branched alkyl radicals having from 1 to 3 carbon atoms and
         the phenyl radical;
         R₄ represents a hydrogen atom or the radical R₃; and
   (b) those of the formula: 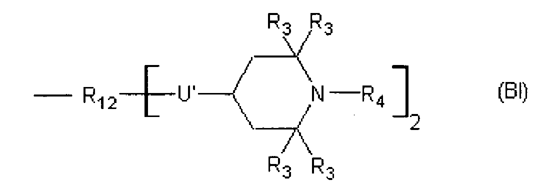 in which:
      R₁₂ is chosen from a trivalent radical of the formula: 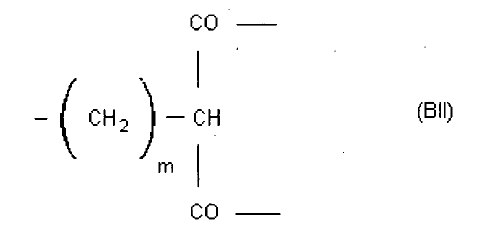 Where m represents a number from 2 to 20, and a trivalent radical of the formula: 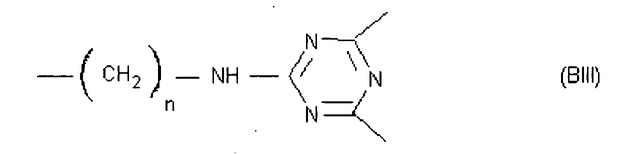 where n represents a number from 2 to 20;
         U' represents -O- or NR₁₃-, R₁₃ being a hydrogen atom or a linear or branched alkyl radical having from 1 to 6 carbon atoms;
         R₃ and R₄ have the same meanings as those given with respect to formula AI;
         x is a number such that the viscosity of the polymer is in the range of from 100 to 20,000 cPs, preferably from about 500 to about 6,000, and most preferably from about 1,000 to 3,000 cPs at 25° C; and
         the ratio of x to y is in the range of from 5:1 to 150:1; preferably from 10:1 to 100:1; and most preferably about 50:1.

Preferably, the polymer of the instant invention comprises a polyorganosiloxane wherein R and R₁ are methyl radicals; and
V is chosen from the piperidinyl group of formula AI wherein
R₂ represents a linear or branched alkylene radical having from 2 to 18 carbon atoms;
U represents -O- or -NR₁₀-, where R₁₀ is chosen from a hydrogen atom, methyl, ethyl, n-propyl, and n-butyl radicals;
R₃ represents a methyl radical;
R₄ represents a hydrogen atom;
and those of formula BI in which:
R₁₂ is chosen from trivalent radicals of formula: 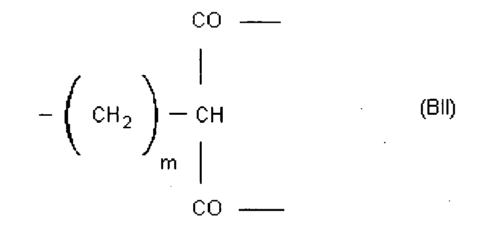
and 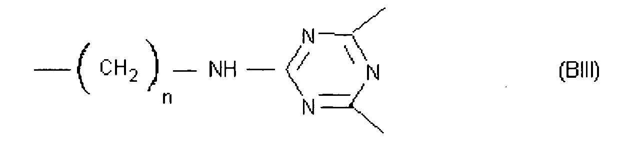 m represents a number from 2 to 20;
n represents a number from 2 to 20;
U' represents -O- or -NR₁₃- where R₁₃ is chosen from a hydrogen atom, methyl, ethyl, n-propyl, and n-butyl radicals;
R₃ represents a methyl radical;
R₄ represents a hydrogen atom; and
x is a number such that the viscosity of the polymer is in the range of from 500 to about 6,000 cPs at 25° C; and
the ratio of x to y is in the range of from 10:1 1 to 100:1.

Most preferably, the polymer of the instant invention comprises a polyorganosiloxane wherein R and R₁ are methyl radicals; and
V is chosen from the piperidinyl group of formula AI wherein
R₂ represents the n-propylene radical;
U represents -O-;
R₃ represents a methyl radical;
R₄ represents a hydrogen atom; and
x is a number such that the viscosity of the polymer is in the range of from 1,000 to about 3,000 cPs at 25° C; and
the ratio of x to y is about 50:1.

As noted above, the primary object of this invention is to provide a unique method for the production of hydroxy terminated, sterically hindered aminated polyorganosiloxanes. In general, this method involves the base catalyzed reaction, under appropriate temperatures and pressures, of certain cyclic siloxanes with polymethyl piperidinyl siloxanes as described herein, wherein the ultimate viscosity of the reaction polymerization product is controlled primarily by the amount of water and pressure utilized in the final stage.

More specifically, the methodology for the production of the hydroxy terminated, aminated polyorganosiloxane polymers of the present invention involves essentially a two-stage or step reaction process.

In the first step, a cyclosiloxane reactant, as more specifically identified below, is contacted in a reaction vessel preferably under inert atmosphere, with a polymethyl piperidinyl siloxane, also more specifically identified below, in the presence of an alkali metal catalyst and a small amount of solvent. The reaction is effected at elevated temperatures until at equilibrium, a high viscosity fluid is obtained, i.e., a high viscosity, linear, hydroxy terminated polyorganosiloxane polymer intermediate having hindered amine functional groups attached to the siloxane backbone. Water is added to the reaction product of the first stage and the mixture heated to effect siloxane chain scission to yield the desired viscosity in the final product.

Useful hydroxy end-capped sterically hindered aminated polyorganosiloxane polymers are obtained when the starting reactants are provided in a mole ratio of the cyclosiloxane to the piperidine compound in the range of from 25:1 1 to 80:1; preferably from 42:1 to 60:1.

The amount of alkali metal catalyst employed in the equilibration/substitution reaction of the first stage is not critical. No particular benefit is derived from using less than 0.001 percent by weight, or more than about 1 percent by weight based on the weight of the initial cyclosiloxane reactant, of the alkali metal catalyst. Preferably, the alkali metal catalyst is present from about 0.01 weight percent to about 0.1 weight percent based on the weight of the initial cyclosiloxane reactant.

Preferably, a small amount of donor solvent is added to the first stage of the equilibration - condensation reaction. In fact, it is difficult to proceed with the ring opening of the instant invention without a small addition of a donor solvent. The donor solvent assists in the local solvation of the counter alkali metal ion. Preferably a polar solvent such as water, alcohol, and the like; and most preferably water is used. The solvent is present in the range of from 0.005 to about 2 percent by weight, and preferably should be present in the range of from about 0.01 to about 0.4 percent by weight, most preferably from about 0.05 to about 0.2 percent by weight of the initial cyclic polysiloxane reactant.

As a general guideline, the temperatures in both the first and second stages should be such as to maintain the components in the vapor phase. The particular conditions in the first stage under which the alkali metal catalyst equilibration/substitution reaction takes place are also not critical. This equilibration/substitution step generally is effected at a temperature of from about 80° C to about 175° C since satisfactory rates are found in this temperature range. At less than 80° C the reaction rates tend to be too slow and there appears to be no advantage to exceeding a temperature of 175° C. The process, of course, should always be conducted below the temperature at which destructive distillation would occur or that at which hydrocarbon groups are cleaved from the silicon atom, i.e., always below 200° C.

Generally, in the first stage of the reaction of this invention, i.e., the equilibration/substitution reaction, the reaction can be carried out at about atmospheric pressure, but the use of sub-atmospheric or super-atmospheric pressure is not precluded. In some cases it may be desirable to employ super-atmospheric pressure, particularly when dealing with volatile bases. For example, when it is desired to prepare initially a lower viscosity siloxane in the first stage, it may be necessary to employ pressure in order to build up a sufficient liquid concentration of the catalyst to give the desired low viscosity product. Conversely, by lowering the pressure in this first equilibration/substitution stage, it is possible to decrease the concentration of the catalyst in the liquid to very low values and hence obtain products of very higher viscosity.

The catalysts useful in the equilibration - condensation reactions of the present invention include all of the alkali metal hydroxides, i.e., lithium hydroxide, sodium hydroxide, potassium hydroxide, rubidium hydroxide, and cesium hydroxide; the preferred catalyst being potassium hydroxide.

In order to enhance the rate at which the equilibration - condensation reaction takes place, most preferably, the solid potassium hydroxide is first reacted with a silicone to render the catalyst in liquid form. Typical of such a reaction product base catalyst is potassium methyl silonate sold by Rhodia as Rhodia Catalyst 104 - a 15 weight percent potassium hydroxide liquid solution.

The reaction rates involved in this reaction scheme will vary with temperature, pressure, base catalyst concentration, and amount of water present. In general, the higher the catalyst concentration, temperature, and pressure, the faster equilibrium will be obtained.

Since the desired viscosity of the final hydroxy terminated, sterically hindered amine polyorganosiloxane polymer product is in the range of from 100 to 20,000 centipoise (cPs) at 25° C; preferably from about 600 to about 6,000 cPs; and most preferably from about 1,000 to about 3,000 cPs at 25° C, the second step or stage in the process of the instant invention involves treating the high viscosity polymer formed in the first step - which can have viscosities from about 200,000 to about 2,000,000 cPs @ 25° C; although preferably these first stage viscosities are in the range of from about 700,000 to about 1,500,000 cPs @ 25° C - with water to reduce the viscosity of the polymer. This can be accomplished by blowing steam across the surface of or through the polymeric mixture in the reaction vessel, however the preferred method of this invention is to add water directly to the reaction mixture. The amount of water added will vary depending upon such factors as the molecular weight of the polymer being treated, the time and temperature at which the mixture of high molecular weight hydroxy terminated sterically hindered amine polyorganosiloxane polymer and water will be heated, the ultimate viscosity desired, etc. Generally, the weight percent of the water to be added to effect the siloxane chain scission is in the range of from about 0.01 percent by weight to about 4.0 percent by weight of the initial cyclosiloxane reactant; preferably from about 0.05 to about 2.0 percent by weight; and most preferably from about 0.1 to about 1.5 percent by weight, all based on the weight of the original cyclosiloxane reactant.

The temperatures at which the chain scissions take place are generally in the same ranges as those disclosed to be useful in the first stage.

By controlling the pressure in the second chain scission step of the instant process, one is able to readily control the amount of water available to accomplish the chain scissions on the high viscosity polymer intermediate of the first stage and thus the ultimate viscosity of the final polymer product. Generally pressures of from about 1 to about 3 atmospheres are sufficient to provide good scission and thereby final viscosity control.

The reactions in these steps are preferably allowed to continue until a constant viscosity is obtained at which point the system is in equilbrium. The times necessary to achieve the equilibrium will vary depending on many factors including the reaction vessel size or configuration but generally the first stage equilibration/substitution reaction is realized in from about one quarter of an hour to about 5 hours, preferably in from about 2 to 4 hours; and the second stage scission reaction generally is accomplished in from about one-half hour to 3 hours, preferably from about 1 to 2 hours.

At the end of the chain scission reaction, the medium is brought to neutral pH by the addition of a specific amount of an appropriate acid neutralizing agent. Preferably, the acid neutralizing agent is in the form of a liquid siloxane reaction product; most preferably a metaphosphonic acid polydimethyl siloxane such as that sold by Rhodia under the trademark Rhodasil Solution 110.

The reaction mixture is then stripped of the silicone volatiles and excess water preferably under vacuum to isolate the desired product.

The cyclic polyoxysiloxanes useful as the first reactant in the processes of the instant invention are compounds of the following formula: 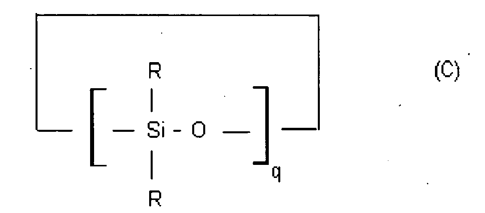 in which the symbols R are identical or different and are selected from the group consisting of a monovalent hydrocarbon radical chosen from linear or branched alkyl radicals having from 1 to 4 carbon atoms, a hydroxyl group, a linear or branched alkoxy radical having from 1 to 3 carbon atoms, the phenyl radical, and the 3,3,3-trifluoropropyl radical; and
q is a number in the range of from 3 to 6.

Preferably R represents a methyl radical; and q is 4, i.e., the preferred cyclic polysiloxane reactant is octamethylcyclotetrasiloxane.

The poly[(methyl)(sterically hindered piperidinyl functional radical)]siloxane wherein the sterically hindered piperidinyl functional radical (**V**) is resulting from the reaction of silicon hydride with a piperidine compound selected from the group consisting of:
(a) compounds of the following formula: 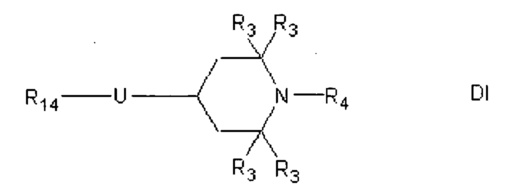 in which:
   R₁₄ is a monovalent hydrocarbon radical chosen from:
      linear or branched alkylene radicals having from 2 to 18 carbon atoms;
      alkylenecarbonyl radicals in which the linear or branched alkylene part contains 2 to 20 carbon atoms;
      alkylenecyclohexylene radicals in which the linear or branched alkylene part contains from 2 to 12 carbon atoms and the cyclohexylene part contains an -OH group and optionally 1 or 2 alkyl radicals having from 1 to 4 carbon atoms;
      radicals of the formula R₅-O-R₆- in which the radicals R₅ and R₆ which are identical or different, represent alkylene radicals having 1 to 12 carbon atoms;
      radicals of the formula R₅-O-R₆- in which the radicals R₅ and R₆ have the meanings indicated above and one of them or both are substituted by one or two -OH groups;
      radicals of the formula R₅-COO-R₆- and R₅-OCO-R₆- in which the radicals R₅ and R₆ have the meanings given above;
      radicals of the formula R₇-O-R₈-O-CO-R₉- in which R₇, R₈, and R₉ , which are identical or different, represent alkylene radicals having from 2 to 12 carbon atoms and the radical R₈ is optionally substituted by a hydroxyl group;
   U represents -O- or -NR₁₀-, R₁₀ being a radical chosen from a hydrogen atom, a linear or branched alkyl radical having from 1 to 6 carbon atoms, a divalent radical R₁₆ chosen from:
      linear or branched alkylene radicals having from 2 to 18 carbon atoms;
      alkylenecarbonyl radicals in which the linear or branched alkylene part contains 2 to 20 carbon atoms;
      alkylenecyclohexylene radicals in which the linear or branched alkylene part contains from 2 to 12 carbon atoms and the cyclohexylene part contains an -OH group and optionally 1 or 2 alkyl radicals having from 1 to 4 carbon atoms;
      radicals of the formula -R₅-O-R₆- in which the radicals R₅ and R₆ which are identical or different, represent alkylene radicals having 1 to 12 carbon atoms;
      radicals of the formula -R₅-O-R₆- in which the radicals R₅ and R₆ have the meanings indicated above and one of them or both are substituted by one or two -OH groups;
      radicals of the formula -R₅-COO-R₆- and R₅-OCO-R₆- in which the radicals R₅ and R₆ have the meanings given above;
      radicals of the formula -R₇-O-R₈-O-CO-R₉- in which R₇, R₈, and R₉ , which are identical or different, represent alkylene radicals having from 2 to 12 carbon atoms and the radical R₈ is optionally substituted by a hydroxyl group; and a divalent radical of the formulae AII 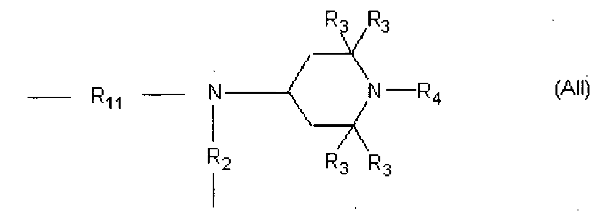 in which:
         R₂ has the meaning given above for R₁₆, R₃ and R₄ have the meanings indicated hereinbelow, and R₁₁ represents a linear or branched alkylene radical having from 1 to 12 carbon atoms;
         R₃ are radicals, which are identical or different, chosen from linear or branched alkyl radicals having from 1 to 3 carbon atoms and the phenyl radical;
         R₄ represents a hydrogen atom or the radical R₃; and
(b) compounds of the formula: 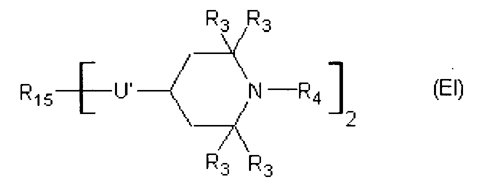 in which:
   R₁₅ is chosen from a divalent radical of the formula:

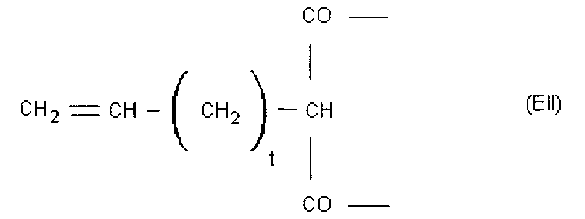

Where t represents a number from 0 to 18; and a divalent radical of the formula: 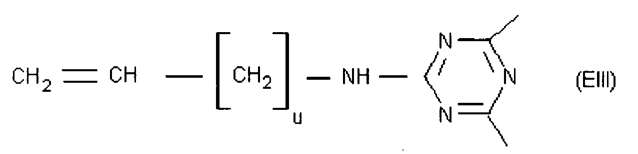 where u represents a number from 0 to 18;
U' represents -O- or NR₁₃-, R₁₃ being a hydrogen atom or a linear or branched alkyl radical having from 1 to 6 carbon atoms;
R₃ and R₄ have the same meanings as those given with respect to formula DI.

Preferably, the piperidine compounds useful in preparing the polymethyl piperidinyl siloxane second reactant in the process of the instant invention are selected from the groups consisting of :
a) compounds of the following formula: 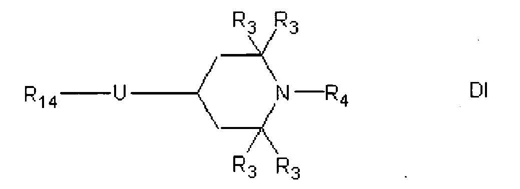 in which:
   R₁₄ represents a monovalent linear or branched alkylene radical having from 2 to 18 carbon atoms;
   U represents -O- or -NR₁₀-, where R₁₀ is chosen from a hydrogen atom, methyl, ethyl, n-propyl, ande n-butyl radicals;
   R₃ represents a methyl radical;
   R₄ represents a hydrogen atom; and
b) compounds of the formula: 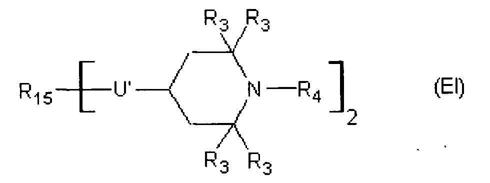 in which:
   R₁₅ is chosen from divalent radicals of the formula: 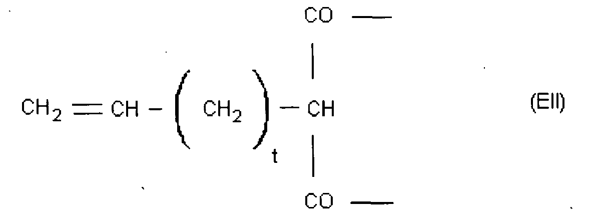
   wherein t represents a number from 0 to 18; and
   a divalent radical of the formula: 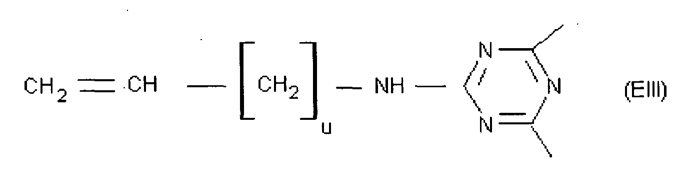 wherein u represents a number from 0 to 18;
   U' represents -O- or -NR₁₃-, where R₁₃ is chosen from a hydrogen atom, methyl, ethyl, n-propyl, and n-butyl radicals;
   R₃ represents a methyl radical; and
   R₄ represents a hydrogen atom.

Most preferably, the piperidene compound used in preparing the polymethyl piperidinyl siloxane second reactant in the process of the instant invention is 2,2,6,6-tetramethyl-4-(2-propenyloxy)piperidene.

As noted above, the instant dihydroxy polymers are excellent finishing agents for woven and knot goods of natural fibers including cellulosic and protein fibers, synthetic fibers, and their blends. Herein "cellulosic fibers" refers to fibers comprising cellulose, and include, but are not limited to cotton, linen, flax, rayon, cellulose acetate, cellulose triacetate, and hemp fibers. Herein "protein fibers are intended to refer to fibers comprising proteins, and include but are not limited to wools, such as sheep wool, alpaca, vicuna, mohair, cashmere, camel and Ilama, as well as furs, suedes and silks. Herein, "synthetic fibers" refer to those fibers that are not prepared from naturally occurring filaments and include, but are not limited to fibers formed of synthetic materials such as polyesters, polyamides such as nylons, polyacrylics, and polyurethanes such as spandex. Synthetic fibers include fibers formed from petroleum products. The treating agents of this invention can also be used to treat other materials such as wood fiber, asbestos, glass fibers; carbon fibers; and silicon carbide fibers. The treated shapes can be filaments, threads, textiles, woven products, nonwoven fibers, etc. However, it is preferred to process substrates in sheet form to allow efficient, continuous treatment.

Applications of the instant polymers in finishes to fabrics can not only produce very smooth, soft, elastic handle effects on these fabrics, but they can also improve the wash and wear properties of fabrics and reduce abrasion losses as well as enhance the fabric's sewability, and its resistance to tearing and pilling. Serendipitously, the treating agents of this invention are also useful in making "downproof" finishes for fabric. These finishes reduce the size of the interstices in the fabric, thereby preventing penetration through the fabric of down, fiberfill or other insulating material and thus loss of the insulating material from the finished article.

The polymers can be applied to the fabric alone, together with other finishing agents, or with other ingredients in a finishing bath. The additional ingredients are usually additives to enhance the characteristics of the finished textile fabric or paper. These additives are typically selected from wetting agents, dye fixing agents, stain repellency agents, anti-abrasion additives, anti-bacterial agents, brighteners, stain repellant agents, color enhancing agents, anti-abrasion additives, UV absorbing agents and fire retarding agents.

The wetting agents are well known in the fields of paper and textile finishing and are typically nonionic surfactants and in particular ethoxylated nonylphenols.

Dye fixing agents or fixatives are commercially available materials which are designed to improve the appearance of dyed fabrics by minimizing the loss of dye from fabrics due to washing. Many are cationic and are based on quaternized nitrogen compounds or on nitrogen compounds having a strong cationic charge which is formed in situ under the conditions of usage.

For additional stain repellency, stain repellent agents can be added to the finishing emulsions and are typically selected from fluoropolymers, flouroalcohols, fluoroethers, fluorosurfactants, anionic polymers (e.g., polyacrylic acid, polyacids/sulfonates, etc.) polyethers (such as PEG), hydrophilic polymers (such as polyamides, polyesters, polyvinyl alcohol.) and hydrophobic polymers (e.g., silicone fluids, hydrocarbons, and aciylates).

For additional anti-abrasion characteristics, agents typically selected from polymers such as polyacrylates, polyurethanes, polyacrylamides, polyamides, polyvinyl alcohol, and polyethylene glycols can be used.

Useful anti-bacterial agents that can be added to the emulsions are well known in the art and include quaternary ammonium containing materials, quaternary silanes, halamines, chitosan and various derivatives thereof, etc.

Optical brighteners or whiteners are often used as additives in finishing composition and include derivatives of stilbene, pyrazoline, coumarin, carboxylic acid, methinecyanines, dibenzothiophene-5,5-dioxide, azoles, 5- and 6-membered ring heterocycles, and other miscellaneous agents well known in the art.

It has been observed that the mere drying of the instant polymer on the fabric substrate can lead to long lasting effects.

The instant polymers are also very useful for providing finishing coats to paper material, especially in end-use applications such as paper towels, toilet paper, household or sanitary absorbent paper, paper handkerchiefs or any other paper requiring good absorbent properties, good mechanical wet strength, a good aptitude for re-pulping and a soft feel.

The application to the fibrous material substrate, e.g., the fabric or paper, of the finishing compositions containing the polyorganosiloxanes of the present invention can be carried out in highly varied forms. The preferred application technique is padding, although others that can be employed include conventional kiss roll application, engraved roll application, printing, foam finishing, vacuum extraction, spray application, or any other existing means known to the textile and paper art. Generally, the padding method provides the highest composition wet pick-up.

The amount of the organosiloxane deposited from the finishing composition to the substrate is usually on the order of from 0.01 to 10 percent by weight, preferably from 0.1 to 2 percent by weight with respect to the original dry weight of the matter to be treated. When the treatment compositions comprise aqueous emulsions, preferably the wet pick-up is at least 20 percent by weight, more preferably from about 50 to 100 % by weight of the substrate. The concentration of the silicone in the emulsion may be adjusted to provide the desired amount of polymer on the fabric or paper substrate.

Drying of the wet fibrous material generally can be conducted at from about 120° C to about 150° C using standard equipment in the art such as dry cans, roller ovens, loop ovens, tenter frames, drum and conveyor dryers, and tumble dryers.

Albeit the instant polymers alone can provide desirable "hand" and "anti-yellowing" properties as described above, they also can be formulated with crosslinking agents into a composition capable of being applied to fabric and cured. This crosslinked resin can provide a matrix for microencapsulated beneficiating ingredients creating so called "smart fabrics" which gradually release certain active ingredients; the matrices utilizing the polymers of the instant invention also enhancing the durability of the microencapsulated material.

Active ingredients that have been microencapsulated and incorporated on and within fabrics include bio-therapeutic agents such as vitamins, medicines, e.g., antimicrobial agents, and depilatories; phase change agents that store and release heat; insect repellants; aromas, such as perfumes; odor absorbents; color changing compositions containing for example photochromic compounds, i.e., compounds that change color with a change of light or thermochromic compounds, i.e., componds that change color with a change of temperature; moisturizing agents such as aloe vera; and fire retardants.

Other than in the operating examples, or where otherwise indicated, all numbers expressing quantities of ingredients or reaction conditions used herein are to be understood as modified in all instances by the term "about".

The invention will now be described with reference to a number of specific examples that are to be regarded solely as illustrative of the methods and compositions of this invention and not as restrictive of the scope thereof. All percentages are by weight unless otherwise indicated.

In the following examples, the KOH base catalyst is Rhodia Catalyst 104, a potassium methyl silonate sold by Rhodia and the acid type catalyst neutralizing agent is Rhodasil Solution 110, a metaphosphonic acid polydimethyl siloxane also sold by Rhodia.

### Example I

A stainless steel pressure reactor is placed under a vacuum of about 25 inches of Hg for 20 minutes and then sealed. The vacuum is released with nitrogen to zero atmospheric pressure. 40.0 kgs of octamethylcyclotetrasiloxane and 2.85 kgs of polymethyl-propyl-3-oxy[4-(2,2,6,6-tetramethyl) piperidinyl] siloxane are introduced to the reactor at room temperature and stirred. The reactor is placed again under vacuum of about 15 inches of Hg and sealed. The content of the reactor is heated to 157° C. When the pressure inside of the reactor drops to zero psi, the first part of demineralized water (48.52 g) is introduced to the reactor followed by 20.1 g of KOH base catalyst. The reaction mixture is left to react at this temperature for about 3 hours and a positive pressure of about 2 to 5 psi is maintained during this time. At the end of the 3-hour period, a second part of demineralized water (450 g) is added portion-wise over a period of 1 hour during which time the pressure inside of the reactor gradually builds up to about 37 psi. The reaction is then maintained at 155° C with a pressure of about 45 psi for one more hour. The KOH base catalyst is then neutralized with 40.2 g of acid type catalyst. The batch is then stripped at 155° C from its silicone volatiles and the excess of unreacted water using vacuum. The product is clear in appearance and has a viscosity of 2,060 cPs at 25° C, a volatiles content of 1.6%, an amine index of 27.46 meq/100g, and a silanol content expressed in terms of (OH%) of 0.12%.

### Example II

A stainless steel pressure reactor is placed under a vacuum of about 25 inches of Hg for 20 minutes and then sealed. The vacuum is then released with nitrogen to zero atmospheric pressure. A mixture of 924.0 kgs of octamethylcyclotetrasiloxane, 65.8 kgs of polymethyl-propyl-3-oxy[4-(2,2,6,6-tetramethyl) piperidinyl] siloxane, and 1.1 kgs of demineralized water (first part) is introduced into the reactor at room temperature and stirred. The contents of the reactor are heated to 160° C and 464 g of KOH base catalyst is introduced to the batch. The reaction mixture is left to react at this temperature for about 3 hours and a positive pressure of about 0.8 bars is maintained during this period. At the end of the 3-hour period, a second part of 3.0 kg of demineralized water is added. Soon after, the pressure inside of the reactor starts to build-up to about 1.2 bars. The pressure is relieved and adjusted back to 0.8 bars. During this period, the reaction is maintained at 160° C for 1.5 hours. The KOH base catalyst is then neutralized with 928 g of acid type catalyst. At the end of the neutralization process, the batch is stripped at 160° C from its silicone volatiles and the excess of unreacted water using vacuum. The product is clear in appearance having a viscosity of 1,400 cPs at 25° C, a volatiles content of 1.19%, an amine index of 29.10 meq/100g, and a silanol content expressed in terms of (OH%) of 0.142%.

### Example III

A stainless steel pressure reactor is placed under a vacuum of about 25 inches of Hg for 20 minutes and then sealed. The vacuum is released with nitrogen to zero atmospheric pressure. A mixture of 924.0 kgs of octamethylcyclotetrasiloxane, 65.8 kgs of polymethyl-propyl-3-oxy[4-(2,2,6,6-tetramethyl) piperidinyl] siloxane, and 1.1 kg of demineralized water (first part) is introduced to the reactor at room temperature and stirred. The content of the reactor is heated to 150° C and 464 g of KOH base catalyst is introduced into the batch. The reaction mixture is left to react at this temperature for about 3 hours and a positive pressure of about 0.8 bars is maintained during this period. At the end of the 3-hour period, a second part of 6.0 kg of demineralized water is added. Soon after, the pressure inside of the reactor builds up to about 1.9 bars at 150° C and the reactor is kept under these conditions for 1.5 hours. The KOH base catalyst is then neutralized with 928 g of acid type catalyst. At the end of the neutralization process, the batch is stripped at 150° C from its silicone volatiles and the excess of unreacted water using vacuum. The product is clear in appearance having a viscosity of 800 cPs at 25° C, a volatiles content of 1.7%, an amine index of 28.02 meq/100g, and a silanol content expressed in terms of (OH%) of 0.182%.

## Claims

1. A method of preparing a hydroxy end-capped, sterically hindered aminated polyorganosiloxane comprising the steps of:
conducting an equilibration-substitution reaction to prepare a high molecular weight polysiloxane intermediate with a composition comprising:
a cyclic polysiloxane of the formula: 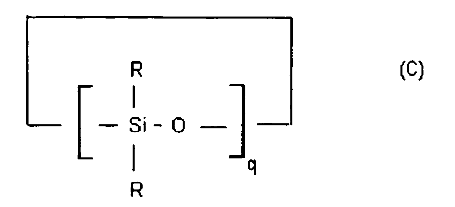
in which the symbols R are identical or different and are selected from the group consisting of a monovalent hydrocarbon radical chosen from linear or branched alkyl radicals having from 1 to 4 carbon atoms, a hydroxyl group, a linear or branched alkoxy radical having from 1 to 3 carbon atoms, the phenyl radical, and the 3,3,3-trifluoropropyl radical; and
q is a number in the range of from 3 to 6; and
a poly[(methyl)(sterically hindered piperidinyl functional radicat)]siloxane wherein the sterically hindered piperidinyl functional radical (**V**) is resulting from the reaction of silicon hydride with a piperidine compound selected from the group consisting of:
(a) compounds of the following formula: 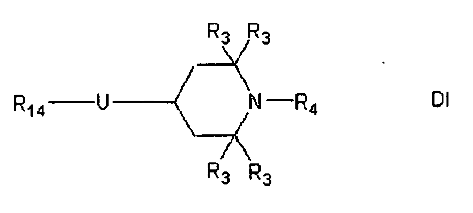 in which:
R₁₄ is a monovalent hydrocarbon radical chosen from:
linear or branched alkylene radicals having from 2 to 18 carbon atoms;
alkylenecarbonyl radicals in which the linear or branched alkylene part contains 2 to 20 carbon atoms;
alkylenecyclohexylene radicals in which the linear or branched alkylene part contains from 2 to 12 carbon atoms and the cyclohexylene part contains an -OH group and optionally 1 or 2 alkyl radicals having from 1 to 4 carbon atoms;
radicals of the formula R₅-O-R₆- in which the radicals R₅ and R₆ which are identical or different, represent alkylene radicals having 1 to 12 carbon atoms;
radicals of the formula R₅-O-R₆- in which the radicals R₅ and R₆ have the meanings indicated above and one of them or both are substituted by one or two -OH groups;
radicals of the formula R₅-COO-R₆- and R₅-OCO-R₆- in which the radicals R₅ and R₆ have the meanings given above;
radicals of the formula R₇-O-R₈-O-CO-R₉- in which R₇, R₈, and
R₉ , which are identical or different, represent alkylene radicals having from 2 to 12 carbon atoms and the radical R₈ is optionally substituted by a hydroxyl group;
U represents -O- or -NR₁₀-, R₁₀ being a radical chosen from a hydrogen atom, a linear or branched alkyl radical having from 1 to 6 carbon atoms, a divalent radical R₁₆ chosen from:
linear or branched alkylene radicals having from 2 to 18 carbon atoms;
alkylenecarbonyl radicals in which the linear or branched alkylene part contains 2 to 20 carbon atoms;
alkylenecyclohexylene radicals in which the linear or branched alkylene part contains from 2 to 12 carbon atoms and the cyclohexylene part contains an -OH group and optionally 1 or 2 alkyl radicals having from 1 to 4 carbon atoms;
radicals of the formula -R₅-O-R₆- in which the radicals R₅ and R₆ which are identical or different, represent alkylene radicals having 1 to 12 carbon atoms;
radicals of the formula -R₅-O-R₆- in which the radicals R₅ and R₆ have the meanings indicated above and one of them or both are substituted by one or two -OH groups;
radicals of the formula -R₅-COO-R₆- and R₅-OCO-R₆- in which the radicals R₅ and R₆ have the meanings given above;
radicals of the formula -R₇-O-R₈-O-CO-R₉- in which R₇, R₈, and R₉ , which are identical or different, represent alkylene radicals having from 2 to 12 carbon atoms and the radical R₈ is optionally substituted by a hydroxyl group;
and a divalent radical of the formulae AII 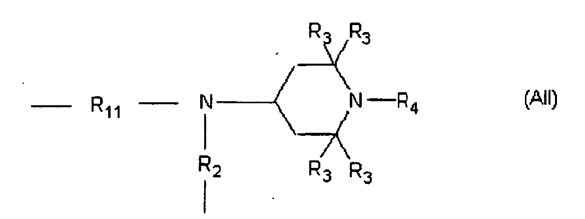
in which:
R₂ has the meaning given above for R₁₆, R₃ and R₄ have the meanings indicated hereinbelow, and R₁₁ represents a linear or branched alkylene radical having from 1 to 12 carbon atoms;
R₃ are radicals, which are identical or different, chosen from linear or branched alkyl radicals having from 1 to 3 carbon atoms and the phenyl radical;
R₄ represents a hydrogen atom or the radical R₃; and
(b) compounds of the formula: 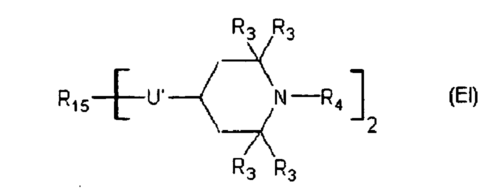 in which:
R₁₅ is chosen from a divalent radical of the formula: 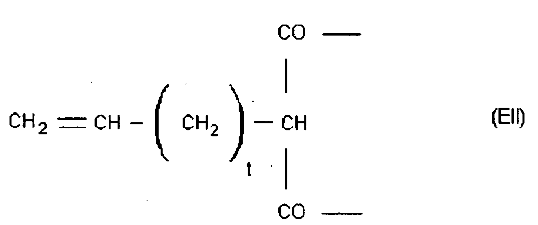 where t represents a number from 0 to 18; and a divalent radical of the formula: 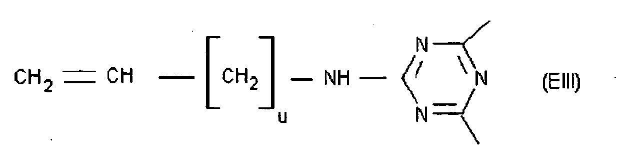 where u represents a number from 0 to 18;
U' represents -O- or NR₁₃-, R₁₃ being a hydrogen atom or a linear or branched alkyl radical having from 1 to 6 carbon atoms;
R₃ and R₄ have the same meanings as those given with respect to formula DI;
in the presence of alkali metal catalyst and solvent;
adding a sufficient amount of water to effect a chain scission reaction of the polysiloxane intermediate such that at reaction equilibium, the viscosity of the hydroxy end-capped, sterically hindered aminated polyorganosiloxane polymer is from 100 to 20,000 centipoise at 25° C.

2. The method of claim one in which the temperatures and pressures in the equilibration-substitution and scission reactions are such that all of the components are maintained in the vapor phase.

3. The method of claim 1 wherein the cyclic polysiloxane is octamethylcyclotetrasiloxane.

4. The method of claim 1 wherein the piperidine compound is selected from the group consisting of:
(a) compounds of the following formula: 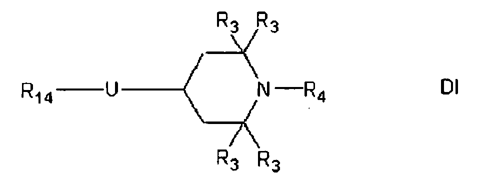 in which:
R₁₄ represents a monovalent linear or branched alkylene radical having from 2 to 18 carbon atoms;
U represents -O- or -NR₁₀-, where R₁₀ is chosen from a hydrogen atom, methyl, ethyl, n-propyl, and n-butyl radicals;
R₃ represents a methyl radical;
R₄ represents a hydrogen atom; and
(b) compounds of the formula: 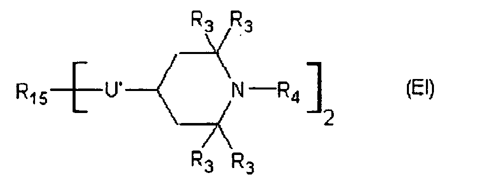 in which:
R₁₅ is chosen from divalent radicals of the formula: 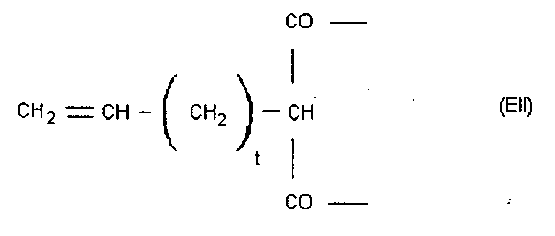 wherein t represents a number from 0 to 18; and a divalent radical of the formula: 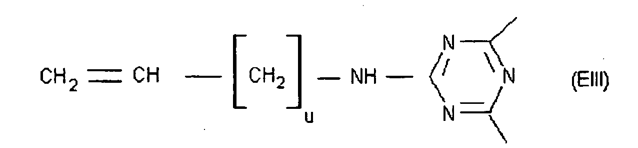 wherein u represents a number from 0 to 18;
U' represents -O- or -NR₁₃-, where R₁₃ is chosen from a hydrogen atom, methyl, ethyl, n-propyl, and n-butyl radicals;
R₃ represents a methyl radical; and
R₄ represents a hydrogen atom.

5. The method of claim 4 wherein the piperidine compound is 2,2,6,6-tetramethyl-4-(2-propenyloxy)piperidine.

6. The method of claim 1 where the mol ratio of the cyclic polysiloxane to the piperidine compound is in the range of from 25:1 to 80:1.

7. The method of claim 1 wherein the amount of alkali metal catalyst employed is from 0.001 to 1 weight percent based on the weight of the cyclic polysiloxane.

8. The method of claim 7 wherein the catalyst is potassium hydroxide.

9. The method of claim 1 wherein the amount of the solvent employed is in the range of from 0.005 to 2 weight percent based on the weight of the cyclic polysiloxane.

10. The method of claim 9 wherein the solvent is water.

11. The method of claim 1 wherein the water to effect the chain scission reaction is present in an amount from about 0.01 to 4.0 weight percent based on the weight of the cyclic polysiloxane.

12. A hydroxy end capped, sterically hindered aminated polyorganosiloxane polymer of the formula: 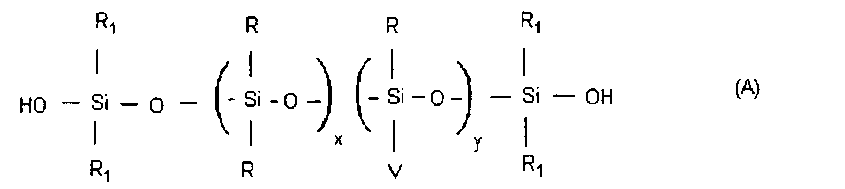 in which:
the symbols R are identical or different and represent a monovalent hydrocarbon radical chosen from linear or branched alkyl radicals having from 1 to 4 carbon atoms, the phenyl radical, and the 3,3,3-trifluoropropyl radical;
the symbols R₁ are identical or different and represent a radical chosen from the monovalent hydrocarbon radical R such as defined hereinabove, a hydroxyl group, and a linear or branched alkoxy radical having from 1 to 3 carbon atoms;
the symbol V represents a sterically hindered piperidinyl functional residue selected from the group consisting of:
(a) groups of the formula: 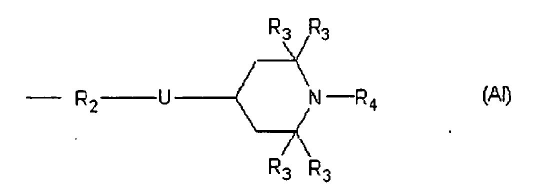 in which:
R₂ is a divalent hydrocarbon radical chosen from:
linear or branched alkylene radicals having from 2 to 18 carbon atoms;
alkylenecarbonyl radicals in which the linear or branched alkylene part contains 2 to 20 carbon atoms;
alkylenecyclohexylene radicals in which the linear or
branched alkylene part contains from 2 to 12 carbon atoms and the cyclohexylene part contains an -OH group and
optionally 1 or 2 alkyl radicals having from 1 to 4 carbon atoms;
radicals of the formula -R₅-O-R₆- in which the radicals R₅ and R₆ which are identical or different, represent alkylene radicals having 1 to 12 carbon atoms;
radicals of the formula -R₅-O-R₆- in which the radicals R₅ and R₆ have the meanings indicated above and one of them or both are substituted by one or two -OH groups;
radicals of the formula -R₅-COO-R₆- and -R₅-OCO-R₆- in which the radicals R₅ and R₆ have the meanings given above;
radicals of the formula -R₇-O-R₈-O-CO-R₉- in which R₇, R₈, and R₉, which are identical or different, represent alkylene radicals having from 2 to 12 carbon atoms and the radical R₈ is optionally substituted by a hydroxyl group;
U represents -O- or-NR₁₀-, R₁₀ being a radical chosen from a hydrogen atom, a linear or branched alkyl radical having from 1 to 6 carbon atoms, a divalent radical R₂ having the meaning indicated above, one of the valency bonds being connected to the nitrogen atom of -NR₁₀- and
the other being connected to a silicon atom, and a divalent radical of the formula: 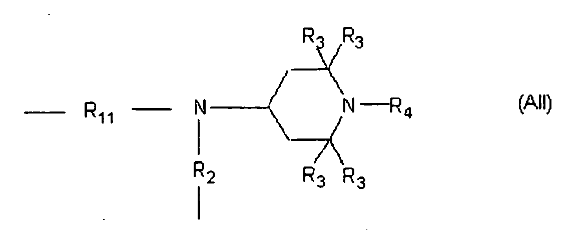 in which:
R₂ has the meaning indicated above, R₃ and R₄ have the meanings indicated hereinbelow, and R₁₁ represents a linear or branched alkylene radical having from 1 to 12 carbon atoms, one of the valency bonds (that of the R₁₁) being connected to the nitrogen atom of -NR₁₀- and the other (that of R₂) being connected to a silicon atom;
R₃ are radicals, which are identical or different, chosen from linear or branched alkyl radicals having from 1 to 3 carbon atoms and the phenyl radical;
R₄ represents a hydrogen atom or the radical R₃; and (b) those of the formula: 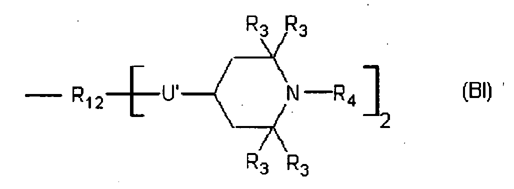
in which:
R₁₂ is chosen from a trivalent radical of the formula: 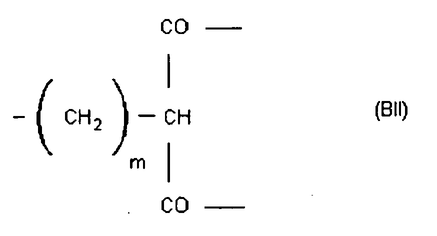 where m represents a number from 2 to 20, and a trivalent radical of the formula: 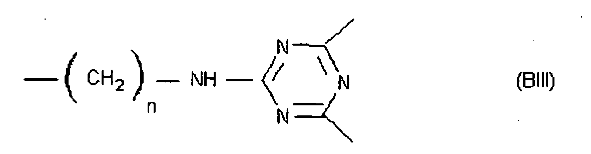 where n represents a number from 2 to 20;
U' represents -O- or NR₁₃-, R₁₃ being a hydrogen atom or a linear or branched alkyl radical having from 1 to 6 carbon atoms;
R₃ and R₄ have the same meanings as those given with respect to formula AI;
x is a number such that the viscosity of the polymer is in the range of from 100 to 20,000 centipoise at 25° C; and
the ratio of x to y is in the range of from 5:1 to 150:1.

13. The polysiloxane of claim 12 wherein x is in the range of from 1,000 to 3,000 centipoise at 25° C.

14. The polysiloxane of claim 12 wherein the ratio of x to y is in the range of from 10:1 1 to 100:1.

15. The polysiloxane of claim 12 wherein
R and R₁ are methyl radicals; and
V is chosen from the piperidinyl group of formula Al wherein
R₂ represents a linear or branched alkylene radical having from 2 to 18 carbon atoms;
U represents -O- or -NR₁₀-, where R₁₀ is chosen from a hydrogen atom, methyl, ethyl, n-propyl, and n-butyl radicals;
R₃ represents a methyl radical;
R₄ represents a hydrogen atom;
and those of formula BI in which:
R12 is chosen from trivalent radicals of formula: 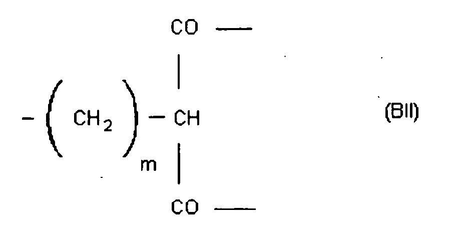 and 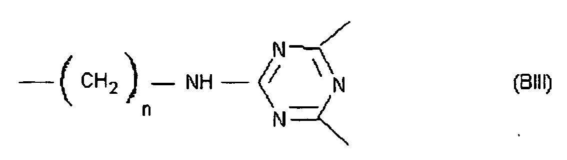
m represents a number from 2 to 20;
n represents a number from 2 to 20;
U' represents -O- or -NR₁₃- where R₁₃ is chosen from a hydrogen atom, methyl, ethyl, n-propyl, and n-butyl radicals;
R₃ represents a methyl radical;
R₄ represents a hydrogen atom; and
x is a number such that the viscosity of the polymer is in the range of from 600 to about 6,000 centipoise at 25° C; and
the ratio of x to y is in the range of from 10:1 to 100:1.

## Patentansprüche

1. Verfahren zur Herstellung eines sterisch gehinderten aminierten Polyorganosiloxans mit Hydroxy-Endgruppen, bei dem man: eine Gleichgewichtssubstitutionsreaktion zur Herstellung eines hochmolekularen Polysiloxan-Zwischenprodukts mit einer Zusammensetzung, umfassend:
ein cyclisches Polysiloxan der Formel: 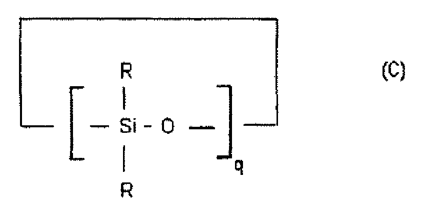 worin die Symbole R gleich oder verschieden sind und aus der Gruppe bestehend aus einem einwertigen Kohlenwasserstoffrest, der unter linearen oder verzweigten Alkylresten mit 1 bis 4 Kohlenstoffatomen, einer Hydroxylgruppe, einem linearen oder verzweigten Alkoxyrest mit 1 bis 3 Kohlenstoffatomen, dem Phenylrest und dem 3,3,3-Trifluorpropylrest ausgewählt ist, ausgewählt sind und
q für eine Zahl im Bereich von 3 bis 6 steht; und ein Poly[(methyl)(sterisch gehinderter piperidinylfunktioneller Rest)]siloxan, worin der sterisch gehinderte piperidinylfunktionelle Rest (V) sich aus der Reaktion von Siliciumhydrid mit einer Piperidinverbindung aus der Gruppe bestehend aus:
(a) Verbindungen der folgenden Formel: 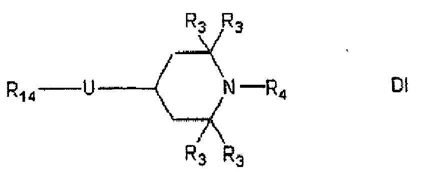 worin:
R₁₄ für einen einwertigen Kohlenwasserstoffrest, der unter:
linearen oder verzweigten Alkylenresten mit 2 bis 18 Kohlenstoffatomen;
Alkylencarbonylresten, worin der lineare oder verzweigte Alkylenteil 2 bis 20 Kohlenstoffatome enthält;
Alkylencyclohexylenresten, worin der lineare oder verzweigte Alkylenteil 2 bis 12 Kohlenstoffatome enthält und der Cyclohexylenteil eine -OH-Gruppe und gegebenenfalls 1 oder 2 Alkylrest mit 1 bis 4 Kohlenstoffatomen enthält;
Resten der Formel R₅-O-R₆, worin die Reste R₅ und R₆ gleich oder verschieden sind und für Alkylenreste mit 1 bis 12 Kohlenstoffatomen stehen;
Resten der Formel R₅-O-R₆, worin die Reste R₅ und R₆ die oben angegebenen Bedeutungen besitzen und einer davon oder beide durch eine oder zwei -OH-Gruppen substituiert sind;
Resten der Formel R₅-COO-R₆ und R₅-OCO-R₆, worin die Reste R₅ und R₆ die oben angegebenen Bedeutungen besitzen;
Resten der Formel R-₇-O-R₈-O-CO-R₉, worin R₇, R₈ und R₉, die gleich oder verschieden sind, für Alkylenreste mit 2 bis 12 Kohlenstoffatomen stehen und der Rest R₈ gegebenenfalls durch eine Hydroxylgruppe substituiert ist;
ausgewählt ist, steht;
U für -O- oder -NR₁₀- steht, wobei R₁₀ für einen unter einem Wasserstoffatom, einem linearen oder verzweigten Alkylrest mit 1 bis 6 Kohlenstoffatomen, einem zweiwertigen Rest R₁₆, der unter
linearen oder verzweigten Alkylresten mit 2 bis 18 Kohlenstoffatomen;
Alkylencarbonylresten, worin der lineare oder verzweigte Alyklenteil 2 bis 20 Kohlenstoffatome enthält;
Alkylencyclohexylenresten, worin der lineare oder verzweigte Alkylenteil 2 bis 12 Kohlenstoffatome enthält und der Cyclohexylenteil eine -OH-Gruppe und gegebenenfalls 1 oder 2 Alkylreste mit 1 bis 4 Kohlenstoffatomen enthält;
Resten der Formel R₅-O-R₆, worin die Reste R₅ und R₆ gleich oder verschieden sind und für Alkylenreste mit 1 bis 12 Kohlenstoffatomen stehen;
Resten der Formel R₅-O-R₆, worin die Reste R₅ und R₆ die oben angegebenen Bedeutungen besitzen und einer davon oder beide durch eine oder zwei -OH-Gruppen substituiert sind;
Resten der Formel R₅-COO-R₆ und R₅-OCO-R₆, worin die Reste R₅ und R₆ die oben angegebenen Bedeutungen besitzen;
Resten der Formel R₇-O-R₈-O-CO-R₉, worin R₇, R₈ und R₉, die gleich oder verschieden sind, für Alkylenreste mit 2 bis 12 Kohlenstoffatomen stehen und der Rest R₈ gegebenenfalls durch eine Hydroxylgruppe substituiert ist;
und einem zweiwertigen Rest der Formel AII 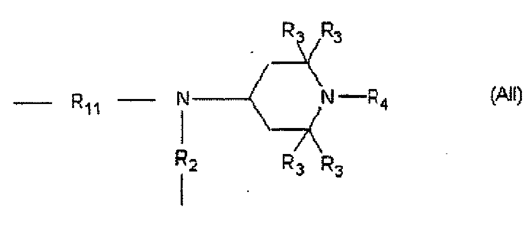 worin:
R₂ die oben für R₁₆ angegebene Bedeutung besitzt, R₃ und R₄ die nachstehend angegebenen Bedeutungen besitzen und R₁₁ für einen linearen oder verzweigten Alkylenrest mit 1 bis 12 Kohlenstoffatomen steht;
R₃ für Reste stehen, die gleich oder verschieden sind und unter linearen oder verzweigten Alkylresten mit 1 bis 3 Kohlenstoffatomen und dem Phenylrest ausgewählt sind und
R₄ für ein Wasserstoffatom oder den Rest R₃ steht; ausgewählt ist; ausgewählten Rest steht; und
(b) Verbindungen der Formel: 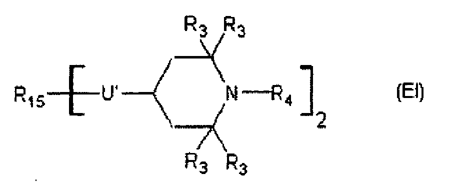 worin:
R₁₅ unter einem zweiwertigen Rest der Formel: 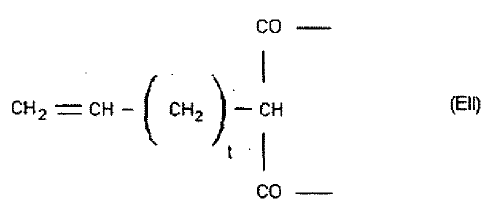 wobei t für eine Zahl von 0 bis 18 steht; und einem zweiwertigen Rest der Formel: 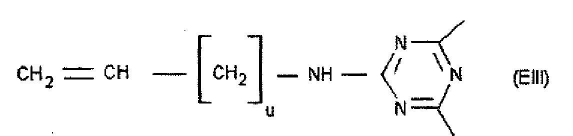 wobei u für eine Zahl von 0 bis 18 steht;
U' für -O- oder NR₁₃- steht, wobei R₁₃ für ein Wasserstoffatom oder einen linearen oder verzweigten Alkylrest mit 1 bis 6 Kohlenstoffatomen steht; ausgewählt ist und
R₃ und R₄ die gleichen Bedeutungen wie oben in bezug auf die Formel DI besitzen;
ergibt; in Gegenwart von Alkalimetallkatalysator und Lösungsmittel durchführt;
eine zur Bewirkung einer Kettenspaltungsreaktion des Polysiloxan-Zwischenprodukts ausreichende Menge Wasser zugibt, so daß die Viskosität des sterisch gehinderten aminierten Polyorganosiloxanpolymers mit Hydroxy-Endgruppen im Reaktionsgleichgewicht 100 bis 20.000 Centipoise bei 25°C beträgt.

2. Verfahren nach Anspruch 1, bei dem man die Temperaturen und Drücke bei der Gleichgewichtssubstitutionsreaktion und der Spaltungsreaktion so wählt, daß alle Komponenten in der Dampfphase gehalten werden.

3. Verfahren nach Anspruch 1, bei dem es sich bei dem cyclischen Polysiloxan um Octamethylcyclotetrasiloxan handelt.

4. Verfahren nach Anspruch 1, bei dem man die Piperidinverbindung aus der Gruppe bestehend aus:
(a) Verbindungen der folgenden Formel: 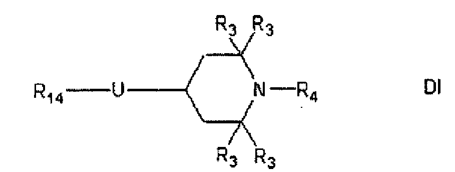 worin:
R₁₄ für einen einwertigen linearen oder verzweigten Alkylenrest mit 2 bis 18 Kohlenstoffatomen steht;
U für -O- oder -NR₁₀- steht, wobei R₁₀ für einen unter einem Wasserstoffatom und Methyl-, Ethyl-,
n-Propyl- und n-Butylresten ausgewählt ist;
R₃ für einen Methylrest steht und
R₄ für ein Wasserstoffatom steht; und
(b) Verbindungen der Formel: 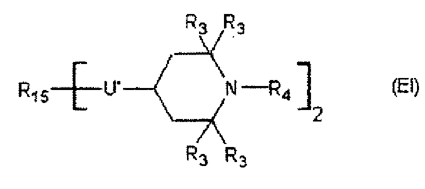 worin:
R₁₅ unter zweiwertigen Resten der Formel: 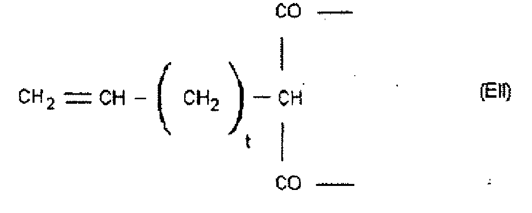 wobei t für eine Zahl von 0 bis 18 steht; und einem zweiwertigen Rest der Formel: 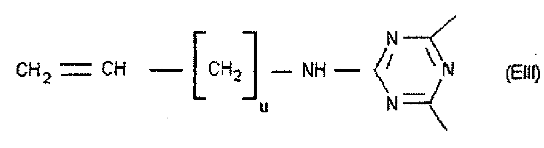 wobei u für eine Zahl von 0 bis 18 steht;
U' für -O- oder NR₁₃- steht, wobei R₁₃ unter einem Wasserstoffatom und Methyl-, Ethyl-, n-Propyl- und n-Butylresten ausgewählt ist;
R₃ für einen Methylrest steht und
R₄ für ein Wasserstoffatom steht;
ausgewählt ist;
auswählt.

5. Verfahren nach Anspruch 4, bei dem es sich bei der Piperidinverbindung um 2,2,6,6-Tetramethyl-4-(2-propenyloxy)piperidin handelt.

6. Verfahren nach Anspruch 1, bei dem das Molverhältnis von cyclischem Polysiloxan zu Piperidinverbindung im Bereich von 25:1 bis 80:1 liegt.

7. Verfahren nach Anspruch 1, bei dem die eingesetzte Menge an Alkalimetallkatalysator 0,001 bis 1 Gewichtsprozent, bezogen auf das Gewicht des cyclischen Polysiloxans, beträgt.

8. Verfahren nach Anspruch 7, bei dem es sich bei dem Katalysator um Kaliumhydroxid handelt.

9. Verfahren nach Anspruch 1, bei dem die eingesetzte Menge an Lösungsmittel im Bereich von 0,005 bis 2 Gewichtsprozent, bezogen auf das Gewicht des cyclischen Polysiloxans, beträgt.

10. Verfahren nach Anspruch 9, bei dem es sich bei dem Lösungsmittel um Wasser handelt.

11. Verfahren nach Anspruch 1, bei dem das Wasser zur Bewirkung der Kettenspaltungsreaktion in einer Menge von etwa 0,01 bis 4,0 Gewichtsprozent, bezogen auf das Gewicht des cyclischen Polysiloxans, vorliegt.

12. Sterisch gehindertes aminiertes Polyorganosiloxanpolymer mit Hydroxy-Endgruppen der Formel 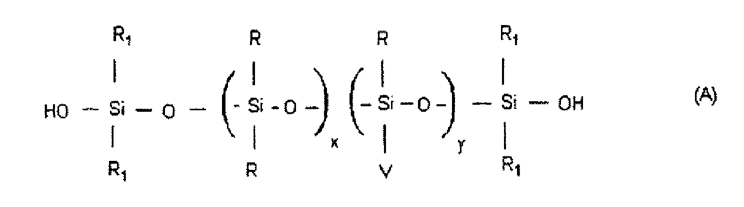 worin:
die Symbole R gleich oder verschieden sind und für einen einwertigen Kohlenwasserstoffrest, der unter linearen oder verzweigten Alkylresten mit 1 bis 4 Kohlenstoffatomen, dem Phenylrest und dem 3,3,3-Trifluorpropylrest ausgewählt ist, stehen;
die Symbole R₁ gleich oder verschieden sind und für einen Rest, der unter dem einwertigen Kohlenwasserstoffrest R gemäß obiger Definition, einer Hydroxylgruppe und einem linearen oder verzweigten Alkoxyrest mit 1 bis 3 Kohlenstoffatomen ausgewählt ist, stehen;
das Symbol V für einen sterisch gehinderten piperidinylfunktionellen Rest, der aus der Gruppe bestehend aus
(a) Gruppen der Formel: 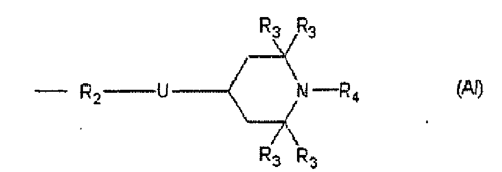 worin:
R₂ für einen zweiwertigen Kohlenwasserstoffrest, der unter
linearen oder verzweigten Alkylenresten mit 2 bis 18 Kohlenstoffatomen; Alkylencarbonylresten, worin der lineare oder verzweigte Alkylenteil 2 bis 20 Kohlenstoffatome enthält;
Alkylencyclohexylenresten, worin der lineare oder verzweigte Alkylenteil 2 bis 12 Kohlenstoffatome enthält und der Cyclohexylenteil eine -OH-Gruppe und gegebenenfalls 1 oder 2 Alkylreste mit 1 bis 4 Kohlenstoffatomen enthält;
Resten der Formel R₅-O-R₆, worin die Reste R₅ und R₆ gleich oder verschieden sind und für Alkylenreste mit 1 bis 12 Kohlenstoffatomen stehen;
Resten der Formel R₅-O-R₆, worin die Reste R₅ und R₆ die oben angegebenen Bedeutungen besitzen und einer davon oder beide durch eine oder zwei -OH-Gruppen substituiert sind;
Resten der Formel R₅-COO-R₆ und R₅-OCO-R₆, worin die Reste R₅ und R₆ die oben angegebenen Bedeutungen besitzen;
Resten der Formel R₇-O-R₈-O-CO-R₉, worin R₇, R₈ und R₉, die gleich oder verschieden sind, für Alkylenreste mit 2 bis 12 Kohlenstoffatomen stehen und der Rest R₈ gegebenenfalls durch eine Hydroxylgruppe substituiert ist;
ausgewählt ist, steht;
U für -O- oder -NR₁₀- steht, wobei R₁₀ für einen unter einem Wasserstoffatom, einem linearen oder verzweigten Alkylrest mit 1 bis 6 Kohlenstoffatomen, einem zweiwertigen Rest R₂ mit der oben angegebenen Bedeutung, wobei eine der Valenzbindungen an das Stickstoffatom von -NR₁₀- gebunden ist und die andere an ein Siliciumatom gebunden ist, und einem zweiwertigen Rest der Formel: 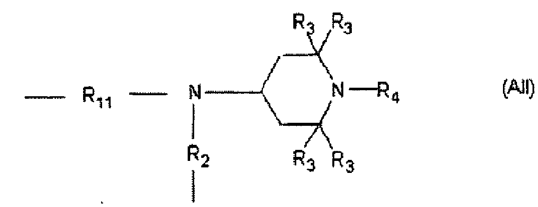 worin:
R₂ die oben angegebene Bedeutung besitzt, R₃ und R₄ die nachstehend angegebenen Bedeutungen besitzen und R₁₁ für einen linearen oder verzweigten Alkylenrest mit 1 bis 12 Kohlenstoffatomen steht, wobei eine der Valenzbindungen (die von R₁₁) an das Stickstoffatom von -NR₁₀- gebunden ist und die andere (die von R₂) an ein Siliciumatom gebunden ist;
R₃ für Reste stehen, die gleich oder verschieden sind und unter linearen oder verzweigten Alkylresten mit 1 bis 3 Kohlenstoffatomen und dem Phenylrest ausgewählt sind und
R₄ für ein Wasserstoffatom oder den Rest R₃ steht; ausgewählt ist; ausgewählten Rest steht; und
(b) denjenigen der Formel: 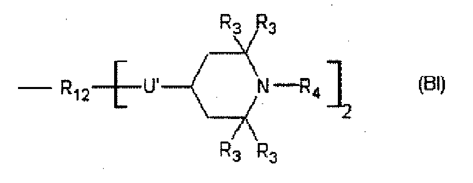 worin:
R₁₂ unter einem dreiwertigen Rest der Formel: 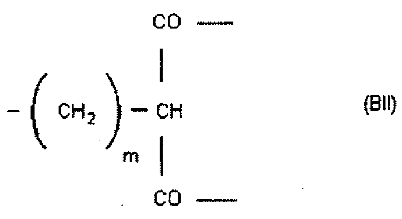 worin m für eine Zahl von 2 bis 20 steht, und einem dreiwertigen Rest der Formel: 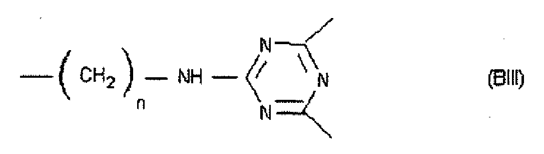 worin n für eine Zahl von 2 bis 20 steht; ausgewählt ist;
U' für -O- oder NR₁₃- steht, wobei R₁₃ für ein Wasserstoffatom oder einen linearen oder verzweigten Alkylrest mit 1 bis 6 Kohlenstoffatomen steht;
R₃ und R₄ die gleichen Bedeutungen wie oben in bezug auf die Formel AI besitzen;
x für eine solche Zahl steht, daß die Viskosität des Polymers im Bereich von 100 bis 20.000 Centipoise bei 25°C liegt und
das Verhältnis von x zu y im Bereich von 5:1 bis 150:1 liegt;
ausgewählt ist; steht.

13. Polysiloxan nach Anspruch 12, wobei x im Bereich von 1000 bis 3000 Centipoise bei 25°C liegt.

14. Polysiloxan nach Anspruch 12, wobei das Verhältnis von x zu y im Bereich von 10:1 bis 100:1 liegt.

15. Polysiloxan nach Anspruch 12, wobei
R und R₁ für Methylreste stehen; und
V unter der Piperidinylgruppe der Formel AI, worin
R₂ für einen linearen oder verzweigten Alkylenrest mit 2 bis 18 Kohlenstoffatomen steht;
U für -O- oder -NR₁₀- steht, wobei R₁₀ unter einem Wasserstoffatom und Methyl-, Ethyl-, n-Propyl- und n-Butylresten ausgewählt ist,;
R₃ für einen Methylrest steht;
R₄ für ein Wasserstoffatom steht;
und denjenigen der Formel BI, worin:
R₁₂ unter dreiwertigen Resten der Formel: 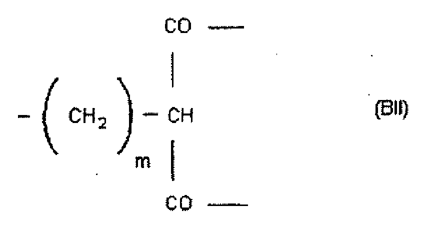 und 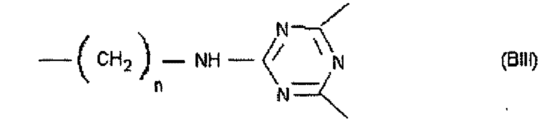 ausgewählt ist;
m für eine Zahl von 2 bis 20 steht;
n für eine Zahl von 2 bis 20 steht;
U' für -O- oder -NR₁₃- steht, wobei R₁₃ unter einem Wasserstoffatom und Methyl-, Ethyl-, n-Propyl- und n-Butylresten ausgewählt ist;
steht;
R₃ für einen Methylrest steht;
R₄ für ein Wasserstoffatom steht und
x für eine solche Zahl steht, daß die Viskosität des Polymers im Bereich von 600 bis etwa 6000 Centipoise bei 25°C liegt; und
das Verhältnis von x zu y im Bereich von 10:1 bis 100:1 liegt;
ausgewählt ist.

## Revendications

1. Procédé de préparation d'un polyorganosiloxane aminé, à encombrement stérique, coiffé à ses extrémités par des hydroxy, comprenant les étapes suivantes :
la réalisation d'une réaction d'équilibrage-substitution pour préparer un intermédiaire polysiloxane de poids moléculaire élevé dont la composition comprend :
un polysiloxane cyclique de formule : 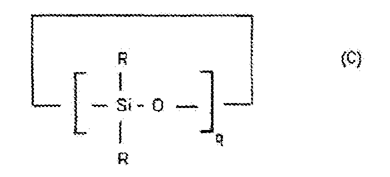 dans laquelle les symboles R sont identiques ou différents et sont choisis dans le groupe constitué par un radical hydrocarboné monovalent choisi parmi les radicaux alkyle linéaires ou ramifiés contenant 1 à 4 atomes de carbone, un groupe hydroxyle, un radical alcoxy linéaire ou ramifié contenant 1 à 3 atomes de carbone, le radical phényle et le radical 3,3,3-trifluoropropyle ; et
q est un nombre dans la plage allant de 3 à 6 ; et
un poly[(méthyl)(radical à fonction pipéridinyle à encombrement stérique)]siloxane, dans lequel le radical à fonction pipéridinyle à encombrement stérique (V) résulte de la réaction d'hydrure de silicium avec un composé de pipéridine choisi dans le groupe constitué par :
(a) les composés de la formule suivante : 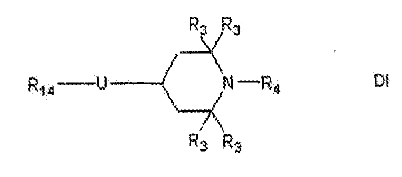 dans laquelle :
R₁₄ est un radical hydrocarboné monovalent choisi parmi :
les radicaux alkylène linéaires ou ramifiés contenant 2 à 18 atomes de carbone ;
les radicaux alkylènecarbonyle dont la partie alkylène linéaire ou ramifiée contient 2 à 20 atomes de carbone ;
les radicaux alkylènecyclohexylène dont la partie alkylène linéaire ou ramifiée contient 2 à 12 atomes de carbone et la partie cyclohexylène contient un groupe - OH et éventuellement 1 ou 2 radicaux alkyle contenant 1 à 4 atomes de carbone ;
les radicaux de formule R₅-O-R₆-, dans laquelle les radicaux R₅ et R₆, qui sont identiques ou différents, représentent des radicaux alkylène contenant 1 à 12 atomes de carbone ;
les radicaux de formule R₅-O-R₆-, dans laquelle les radicaux R₅ et R₆ ont les significations indiquées ci-dessus, et l'un d'entre eux ou les deux sont substitués par un ou deux groupes -OH ;
les radicaux de formule R₅-COO-R₆- et R₅-OCO-R₆-, dans lesquelles les radicaux R₅ et R₆ ont les significations données ci-dessus ;
les radicaux de formule R₇-O-R₈-O-CO-R₉-, dans laquelle R₇, R₈ et R₉, qui sont identiques ou différents, représentent des radicaux alkylène contenant 2 à 12 atomes de carbone et le radical R₈ est éventuellement substitué par un groupe hydroxyle ;
U représente -O- ou -NR₁₀-, R₁₀ étant un radical choisi parmi un atome d'hydrogène, un radical alkyle linéaire ou ramifié contenant 1 à 6 atomes de carbone, un radical bivalent R₁₆ choisi parmi :
les radicaux alkylène linéaires ou ramifiés contenant 2 à 18 atomes de carbone ;
les radicaux alkylènecarbonyle dont la partie alkylène linéaire ou ramifié contient 2 à 20 atomes de carbone ;
les radicaux alkylènecyclohexylène dont la partie alkylène linéaire ou ramifiée contient 2 à 12 atomes de carbone et la partie cyclohexylène contient un groupe -OH et éventuellement 1 ou 2 radicaux alkyle contenant 1 à 4 atomes de carbone ;
les radicaux de formule -R₅-O-R₆-, dans laquelle les radicaux R₅ et R₆, qui sont identiques ou différents, représentent des radicaux alkylène contenant 1 à 12 atomes de carbone ;
les radicaux de formule -R₅-O-R₆-, dans laquelle les radicaux R₅ et R₆ ont les significations indiquées ci-dessus, et l'un d'entre eux ou les deux sont substitués par un ou deux groupes -OH ;
les radicaux de formule -R₅-COO-R₆- et R₅-OCO-R₆-, dans lesquelles les radicaux R₅ et R₆ ont les significations données ci-dessus ;
les radicaux de formule -R₇-O-R₈-O-CO-R₉-, dans laquelle R₇, R₈ et R₉, qui sont identiques ou différents, représentent des radicaux alkylène contenant 2 à 12 atomes de carbone et le radical R₈ est éventuellement substitué par un groupe hydroxyle ;
et un radical bivalent de formule AII 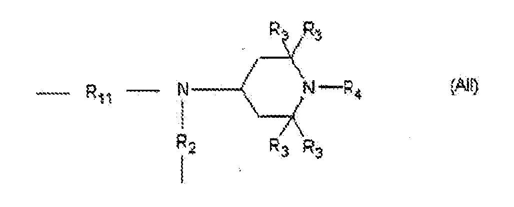 dans laquelle :
R₂ a la signification donnée ci-dessus pour R₁₆, R₃ et R₄ ont les significations indiquées ci-dessous et R₁₁ représente un radical alkylène linéaire ou ramifié contenant 1 à 12 atomes de carbone ;
les R₃ sont des radicaux, qui sont identiques ou différents, choisis parmi les radicaux alkyle linéaires ou ramifiés contenant 1 à 3 atomes de carbone et le radical phényle ;
R₄ représente un atome d'hydrogène ou le radical R₃ ; et
(b) les composés de la formule : 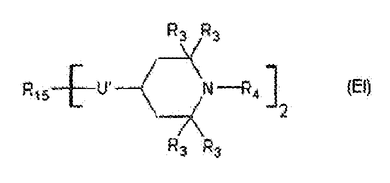 dans laquelle :
R₁₅ est choisi parmi un radical bivalent de formule : 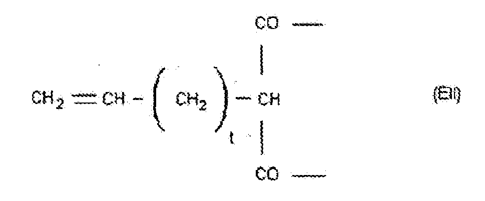 dans laquelle t représente un nombre de 0 à 18 ; et un radical bivalent de formule : 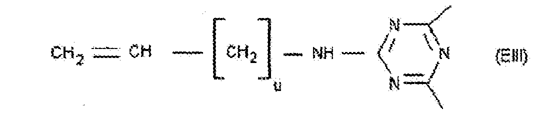 dans laquelle u représente un nombre de 0 à 18 ;
U' représente -O- ou NR₁₃-, R₁₃ étant un atome d'hydrogène ou un radical alkyle linéaire ou ramifié contenant 1 à 6 atomes de carbone ;
R₃ et R₄ ont les mêmes significations que celles données au regard de la formule DI ;
en présence d'un catalyseur à base d'un métal alcalin et d'un solvant ;
l'ajout d'une quantité suffisante d'eau pour effectuer une réaction de scission de chaîne de l'intermédiaire polysiloxane de manière à ce qu'à l'équilibre de la réaction, la viscosité du polymère polyorganosiloxane aminé, à encombrement stérique, coiffé à ses extrémités par des hydroxy, soit de 100 à 20 000 centipoises à 25°C.

2. Procédé selon la revendication 1, dans lequel les températures et les pressions lors des réactions d'équilibrage-substitution et de scission sont telles que tous les composants sont maintenus en phase vapeur.

3. Procédé selon la revendication 1, dans lequel le polysiloxane cyclique est l'octaméthylcyclotétrasiloxane.

4. Procédé selon la revendication 1, dans lequel le composé de pipéridine est choisi dans le groupe constitué par :
(a) les composés de la formule suivante : 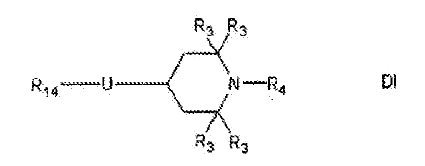 dans laquelle :
R₁₄ représente un radical alkylène monovalent linéaire ou ramifié contenant 2 à 18 atomes de carbone ;
U représente -O- ou -NR₁₀-, R₁₀ étant choisi parmi un atome d'hydrogène, les radicaux méthyle, éthyle, n-propyle et n-butyle ;
R₃ représente un radical méthyle ;
R₄ représente un atome d'hydrogène ; et
(b) les composés de la formule : 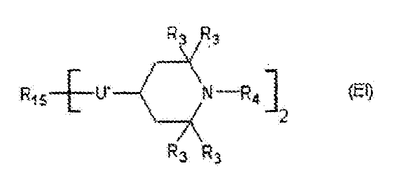 dans laquelle :
R₁₅ est choisi parmi les radicaux bivalents de formule : 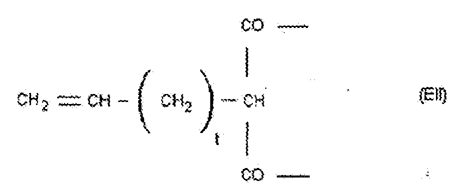 dans laquelle t représente un nombre de 0 à 18 ; et un radical bivalent de formule : 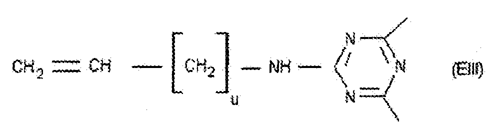 dans laquelle u représente un nombre de 0 à 18 ;
U' représente -O- ou -NR₁₃-, R₁₃ étant choisi parmi un atome d'hydrogène, les radicaux méthyle, éthyle, n-propyle et n-butyle ;
R₃ représente un radical méthyle ; et
R₄ représente un atome d'hydrogène.

5. Procédé selon la revendication 4, dans lequel le composé de pipéridine est la 2,2,6,6-tétraméthyl-4-(2-propényloxy)pipéridine.

6. Procédé selon la revendication 1, dans lequel le rapport molaire entre le polysiloxane cyclique et le composé de pipéridine est dans la plage allant de 25:1 à 80:1.

7. Procédé selon la revendication 1, dans lequel la quantité de catalyseur à base d'un métal alcalin employée est de 0,001 à 1 pourcent en poids par rapport au poids du polysiloxane cyclique.

8. Procédé selon la revendication 7, dans lequel le catalyseur est l'hydroxyde de potassium.

9. Procédé selon la revendication 1, dans lequel la quantité de solvant employée est dans la plage allant de 0,005 à 2 pourcent en poids par rapport au poids du polysiloxane cyclique.

10. Procédé selon la revendication 9, dans lequel le solvant est l'eau.

11. Procédé selon la revendication 1, dans lequel l'eau destinée à effectuer la réaction de scission de chaîne est présente en une quantité d'environ 0,01 à 4,0 pourcent en poids par rapport au poids du polysiloxane cyclique.

12. Polymère polyorganosiloxane aminé, à encombrement stérique, coiffé à ses extrémités par des hydroxy, de formule : 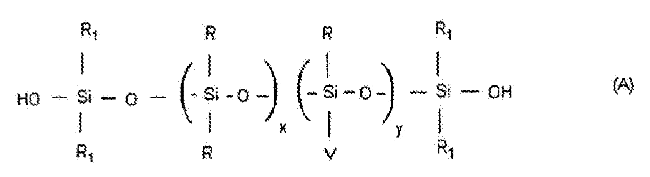 dans laquelle :
les symboles R sont identiques ou différents et représentent un radical hydrocarboné monovalent choisi parmi les radicaux alkyle linéaires ou ramifiés contenant 1 à 4 atomes de carbone, le radical phényle et le radical 3,3,3-trifluoropropyle ;
les symboles R₁ sont identiques ou différents et représentent un radical choisi parmi le radical hydrocarboné monovalent R tel que défini ci-dessus, un groupe hydroxyle et un radical alcoxy linéaire ou ramifié contenant 1 à 3 atomes de carbone ;
le symbole V représente un résidu à fonction pipéridinyle à encombrement stérique choisi dans le groupe constitué par :
(a) les composés de la formule : 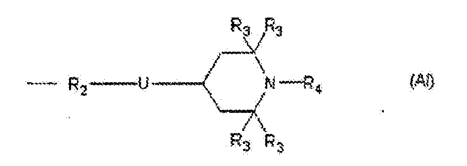 dans laquelle :
R₂ est un radical hydrocarboné bivalent choisi parmi :
les radicaux alkylène linéaires ou ramifiés contenant 2 à 18 atomes de carbone ;
les radicaux alkylènecarbonyle dont la partie alkylène linéaire ou ramifiée contient 2 à 20 atomes de carbone ;
les radicaux alkylènecyclohexylène dont la partie alkylène linéaire ou ramifiée contient 2 à 12 atomes de carbone et la partie cyclohexylène contient un groupe - OH et éventuellement 1 ou 2 radicaux alkyle contenant 1 à 4 atomes de carbone ;
les radicaux de formule -R₅-O-R₆-, dans laquelle les radicaux R₅ et R₆, qui sont identiques ou différents, représentent des radicaux alkylène contenant 1 à 12 atomes de carbone ;
les radicaux de formule -R₅-O-R₆-, dans laquelle les radicaux R₅ et R₆ ont les significations indiquées ci-dessus, et l'un d'entre eux ou les deux sont substitués par un ou deux groupes -OH ;
les radicaux de formule -R₅-COO-R₆- et -R₅-OCO-R₆-, dans lesquelles les radicaux R₅ et R₆ ont les significations données ci-dessus ;
les radicaux de formule -R₇-O-R₈-O-CO-R₉-, dans laquelle R₇, R₈ et R₉, qui sont identiques ou différents, représentent des radicaux alkylène contenant 2 à 12 atomes de carbone et le radical R₈ est éventuellement substitué par un groupe hydroxyle ;
U représente -O- ou -NR₁₀-, R₁₀ étant un radical choisi parmi un atome d'hydrogène, un radical alkyle linéaire ou ramifié contenant 1 à 6 atomes de carbone, un radical bivalent R₂ ayant la signification indiquée ci-dessus, l'une des liaisons de valence étant connectée à l'atome d'azote de -NR₁₀- et l'autre étant connectée à un atome de silicium, et un radical bivalent de formule : 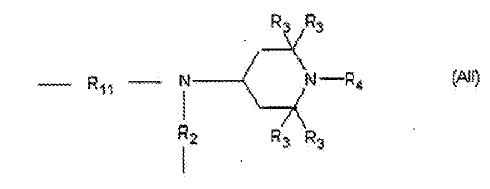 dans laquelle :
R₂ a la signification indiquée ci-dessus, R₃ et R₄ ont les significations indiquées ci-dessous et R₁₁ représente un radical alkylène linéaire ou ramifié contenant 1 à 12 atomes de carbone, une des liaisons de valence (celle de R₁₁) étant connectée à l'atome d'azote de -NR₁₀- et l'autre (celle de R₂) étant connectée à un atome de silicium ;
les R₃ sont des radicaux, qui sont identiques ou différents, choisis parmi les radicaux alkyle linéaires ou ramifiés contenant 1 à 3 atomes de carbone et le radical phényle ;
R₄ représente un atome d'hydrogène ou le radical R₃ ; et
(b) ceux de la formule : 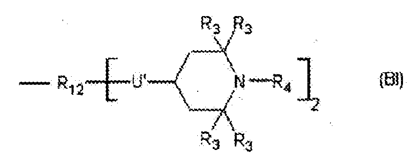 dans laquelle :
R₁₂ est choisi parmi un radical trivalent de formule : 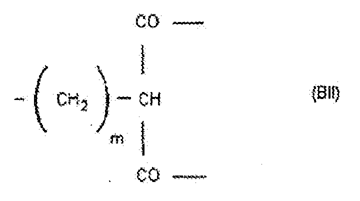 dans laquelle m représente un nombre de 2 à 20 ; et un radical trivalent de formule : 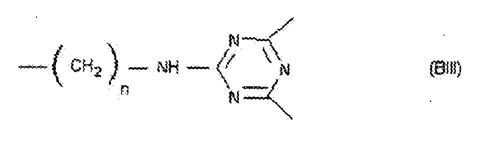 dans laquelle n représente un nombre de 2 à 20 ;
U' représente -O- ou NR₁₃-, R₁₃ étant un atome d'hydrogène ou un radical alkyle linéaire ou ramifié contenant 1 à 6 atomes de carbone ;
R₃ et R₄ ont les mêmes significations que celles données au regard de la formule AI ;
x est un nombre tel que la viscosité du polymère soit dans la plage allant de 100 à 20 000 centipoises à 25 °C ; et
le rapport entre x et y est dans la plage allant de 5:1 à 150:1.

13. Polysiloxane selon la revendication 12, dans lequel x est dans la plage allant de 1 000 à 3 000 centipoises à 25°C.

14. Polysiloxane selon la revendication 12, dans lequel le rapport entre x et y est dans la plage allant de 10:1 à 100:1.

15. Polysiloxane selon la revendication 12, dans lequel
R et R₁ sont des radicaux méthyle ; et
V est choisi parmi le groupe pipéridinyle de formule AI, dans laquelle
R₂ représente un radical alkylène linéaire ou ramifié contenant 2 à 18 atomes de carbone ;
U représente -O- ou -NR₁₀-, R₁₀ étant choisi parmi un atome d'hydrogène, les radicaux méthyle, éthyle, n-propyle et n-butyle ;
R₃ représente un radical méthyle ;
R₄ représente un atome d'hydrogène,
et ceux de formule BI, dans laquelle :
R₁₂ est choisi parmi les radicaux trivalents de formule : 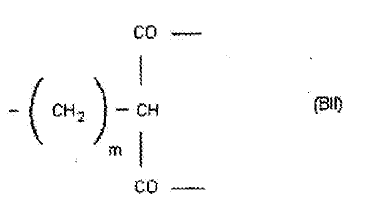 et 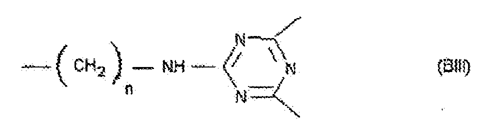 m représente un nombre de 2 à 20 ;
n représente un nombre de 2 à 20 ;
U' représente -O- ou -NR₁₃-, R₁₃ étant choisi parmi un atome d'hydrogène, les radicaux méthyle, éthyle, n-propyle et n-butyle ;
R₃ représente un radical méthyle ;
R₄ représente un atome d'hydrogène ; et
x est un nombre tel que la viscosité du polymère soit dans la plage allant de 600 à environ 6 000 centipoises à 25 °C ; et
le rapport entre x et y est dans la plage allant de 10:1 à 100:1.
